# EUROPEAN PATENT SPECIFICATION

(11) **EP 0 728 386 B1**
(45) Date of publication and mention of the grant of the patent: **20.01.1999**
(21) Application number: 95903504.9
(22) Date of filing: 08.11.1994
(51) Int. Cl.: H04B 7/195

(54) **SYSTEM WITH SATELLITES ON EQUATORIAL AND INCLINED ORBITS RELAYING INFORMATION THROUGH INTERSATELLITES LINK AND EARTH RELAYS**
ANORDNUNG MIT SATELLITEN AUF AQUATORIALEN UND GENEIGTEN UMLAUFBAHNEN WOBEI INFORMATIONEN UBER SATELLITEN ODER ERDSTATIONEN UBERTRAGEN WERDEN
SYSTEME A SATELLITES SUR ORBITES EQUATORIALE ET INCLINEE TRANSMETTANT DES INFORMATIONS PAR DES LIAISONS INTERSATELLITES ET DES RELAIS TERRESTRES

(30) Priority: 09.11.1993 US 149574; 28.03.1994 US 216820
(43) Date of publication of application: 28.08.1996
(73) Proprietor: LEO ONE IP, L.L.C., St. Louis, MO 63105 (US)
(72) Inventor: STUART, James, R., Louisville, CO 80027 (US); STURZA, Mark, Alan, Woodland Hills, CA 91364 (US); VILLALVAZO, Jose Manuel, Mexico City, Mexico 09480, D.F. (MX)
(74) Representative: Powell, Stephen David
(86) International application number: US9410904
(87) International publication number: WO9513671

(56) References cited:
- EP-A- 0 317 974
- US-A- 3 340 531
- US-A- 4 361 886
- US-A- 4 809 935
- US-A- 4 870 642
- THE JOURNAL OF THE INSTITUTION OF ELECTRONIC AND RADIO ENGINEERS, vol.57, no.5, September 1987, LONDON,UK; pages S163 - S173 J.W.WARD 'The UoSAT-2 digital communications experiment'
- MILCOM 1987, vol.2, no.20, 19 October 1987, NEW-YORK,US; pages 404 - 411, XP14579 L.P.CLARE ET AL. 'Multiple Satellite Networks: performance evaluation via simulation.'
- IEEE JOURNAL ON SELECTED AREAS IN COMMUNICATIONS, vol.10, no.2, February 1992, NEW-YORK,US; pages 418 - 427, XP272931 JAIDEV KANIYIL ET AL 'A Global Message Network Employing Low Earth-Orbiting Satellites.'

## Description

### TECHNICAL FIELD

The present invention relates to satellites and. more specifically, to a store-and-forward non-geostationary, non-voice satellite communication system.

### BACKGROUND ART

### I. The Increasing Demand for Telecommunications Services

Over the past few decades, the demand for access to information has increased dramatically. Although conventional wire and fiber landlines, cellular networks and geostationary satellite systems have continued to expand in an attempt to meet this relentless growth in demand, the existing capacity is still not sufficient to meet the burgeoning global appetite for telecommunications services.

The history of mobile communications can be seen as an effort to make service widely available on both a geographic and economic basis. Early mobile communications systems served the needs of individual companies on a private basis. Through technology advances and regulatory changes, mobile communication services were offered on a commercial basis and grew to meet city, regional, national, and even international coverage needs through interconnection to public networks. As part of this evolution, wireless network standards have developed, on both a national and international basis, although there are still no truly international seamless wireless networks.

As mobile communications networks have expanded geographically, prices for equipment and services have fallen dramatically. The decline in the price of mobile services is one of the most important forces helping mobile communications reach broad-based markets and demonstrate rapid subscriber growth. The forces driving development of terrestrial wireless communications include:

### Advances in Technology

Advances in radio propagation management, computer micro-processing, the ability to interconnect networks, and miniaturization have all combined to make more efficient use of spectrum, and to lower equipment and service prices.

### Declining Prices

As production increases for infrastructure and terminal equipment, manufacturers experience economies of scale which lead to lower prices for equipment.

### Digital Technology

Digital technology is replacing analog technology in almost all wireless communication services. The switch to digital technology allows higher subscriber capacities to be served, enhances services, and lowers the cost per subscriber for operators.

The resulting reductions in service and equipment cost attributable to the factors described above have allowed mobile communications to penetrate both business and consumer markets. The ultimate goal of wireless services is to provide two-way, ubiquitous, affordable communications services. It was only very recently, with the introduction of mobile satellite services, that this has been made possible. Indeed. mobile satellite services are the final step in the evolution of wireless communications service and are the only services which can provide this ultimate goal of ubiquitous wireless communication.

### II. Terrestrial-Based Mobile Communications Services

Currently, there are five major types of public mobile communications services used throughout the world:

### Cellular

Cellular provides primarily two-way, interconnected voice service with mobile, transportable, and portable telephones. Reusing frequencies within a relatively small geographic area with multiple, low power transmission sites is cellular's distinguishing technical characteristic. Cellular also provides a platform for data transmission, although the vast majority of traffic over cellular is voice at this time.

### Paging

Paging provides primarily one-way data transmission of numeric and alphanumeric messages. Relative to cellular, paging is less expensive but does not offer voice or two-way communications capabilities.

### Private Radio/SMR

Private radio has largely grown out of the need for dispatch and fleet companies to utilize internal radio systems. Private radio provides primarily two-way voice service to closed user groups, but may also provide interconnected and mobile data services. SMR is a subset of private radio with the distinguishing characteristic that service is provided on a commercial basis to businesses by carriers instead of the businesses owning their own systems.

### Mobile Data

Several networks have been established, such as RAM's Mobitex™ and Motorola's ARDIS™, for the exclusive transmission of mobile data. Cellular, paging, and SMR operators are all considering ways in which to modify their networks to better handle two-way data transmission.

### Personal Communications Services (PCS)

Using microcell technology, PCS includes a wide range of voice and data services. One-way outgoing PCS services, called CT-2, are licensed in several countries such as the U.K., Taiwan and the Netherlands.

The growth and evolution of mobile services show that subscribers migrate from basic limited services to more advanced services over time. The growth of terrestrial-based mobile services will increase the awareness and demand for enhanced mobile satellite services. Moreover, mobile satellite services will be able to provide service in areas that cannot be economically served using terrestrial networks.

### III. Wireless Communications

As a result of the advances in technology, privatization, and decreasing prices on a world-wide basis, wireless communications have undergone a rapid increase in subscriber growth in the past several years. The result is that new enhanced wireless services tend to gain market acceptance more rapidly than did earlier wireless technologies. This phenomenon is attributable to the increasing functionality, value relative to price, and awareness among the population of each successive technology. Paging was introduced with only one-way, non-voice communications at a relatively high price. SMR provided two-way communications, but only within a closed user-group. Finally, cellular offered two-way interconnected voice with increasingly wide area coverage. The result of the rapid growth in wireless services worldwide builds an awareness and future demand for the benefits of advanced wireless communications.

### IV. Mobile Satellite Services

Mobile satellite services are uniquely positioned to complete the evolution of wireless services. These services offer:

### Ubiquitous coverage

Satellites, by their very nature, provide the capability of global coverage. The economics of terrestrial-based networks is such that universal coverage is not a realistic goal.

### Interconnection with other networks

Mobile satellite services will be able to interconnect with a number of voice and data networks, both wired and wireless, and therefore provide a wide array of services and network access.

### Variety of services

Mobile satellites will be able to support both voice and data terminals, depending upon the particular need of the user. In general, however, voice service will be expensive relative to data, due to the greater infrastructure required for voice communications and the generally greater efficiency of data communications.

Several previous efforts to enhance world-wide communications capabilities are briefly described below. In European Patent Application No. 89 118 458.2, Bertiger et al. propose a low Earth orbit system for facilitating global cellular/trunked mobile communications.

Robert R. Newton disclosed a *Multipurpose Satellite System* in his U.S. Patent No. 3,497,807. Newton describes a system in which "any point on earth is always within the line of sight of some satellite and any satellite is always within the line of sight of an adjacent satellite in the same orbital plane." See Newton, Column 2, Lines 4-7.

U.S. Patent No. 4,135,156 by Sanders et al., entitled *Satellite Communications System Incorporating Ground Relay Station Through Which Messages Between Terminal Stations Are Routed,* contains a description of a "satellite relay communications system" that "includes a ground relay station arranged so that each message from one subscriber to another is relayed by the satellite relay to the ground relay, processed by the ground relay and then transmitted to the second subscriber by way of the satellite relay. " See Sanders et al., Abstract, Lines 1-6.

Paul S. Visher disclosed a *Satellite Arrangement Providing Effective Use of the Geostationary Orbit* in his U.S. Patent No. 4,375,697. His patent recites a "satellite squadron or cluster formation " which " is disposed in a predetermined location in...geostationary orbit...." See Visher, Abstract, Lines 1-2.

In their U.S. Patent No. 5,119,225, Michael Grant et al. explain their *Multiple Access Communication System.* The inventors disclose a system that incorporates "a node spacecraft" in geostationary orbit that works in combination with "several user spacecraft" in low Earth orbit. See Grant et al., Abstract, Lines 1-3.

None of the systems described above are capable of supplying a very low cost yet worldwide store-and-forward non-voice communications network that does not require expensive and complex terrestrial or geosynchronous satellite equipment. The development of such a system would constitute a major technological advance and would satisfy a long felt need in the electronics and telecommunications industries.

### DISCLOSURE OF THE INVENTION

One of the embodiments of the present invention is a satellite system that includes six to fourteen satellites which operate in a single Equatorial orbit. These satellites flying over the Equator are capable of providing communications services to locations on the Earth which are within thirty degrees of the Equator. This embodiment is designed to furnish service to Mexico and to a large number of developing countries.

Another embodiment of the invention utilizes both this single orbit plane occupied by satellites operating over the Equator in combination with other satellites moving in polar or inclined orbits. The embodiment that combines satellites in equatorial, polar and inclined orbits will provide a wide variety of data services to virtually any point on the globe.

The satellites are designed to operate in a circular low Earth orbit at an altitude of from 800 to 1,852 kilometers. They are also capable of speeding messages around the globe either by working in combination with relay stations on the ground, transferring message payloads across different orbits via the relay stations or through the use of inter-satellite links.

The systems disclosed below are unique in their ability to provide affordable worldwide service, resulting in a competitive advantage over other terrestrial and previous satellite-based service providers.

The present invention is designed to supply affordable Non-Voice, Non-Geostationary Mobile Satellite Service (NVNG MSS) in several markets:
- TracSat™:: Tracking and monitoring for the transportation industry.
- SecurSat™:: Fixed site monitoring of industrial/utility locations, monitoring and tracking for misplaced or stolen assets.
- MailSat™:: Transmission of e-mail.
- PageSat™:: Two-way alphanumeric paging.
- EmerSat™:: Emergency services.

The services, demand and markets for each are described below and summarized are in Tables A1 and A2.

EP-A-0536921 discloses a communications system employing a constellation of low Earth orbit satellites which operate as simple relay stations and which communicate with gateways and roaming users.

The Conference Record "Milcom 87, vol. 2, no. 20, 19 October 1987, pages 404-411", discloses a satellite communications system having earth bound nodes which are capable of communicating with each other and with a network operating and control centre and discusses the orbits used by the satellites, including equatorial and inclined orbits.

The Journal of the Institution of Radio Engineers, vol. 57, no. 5, September 1987, pages S163-S173 discloses a store-and-forward communications system employing a single low earth orbit satellite.

IEEE Journal on selected Areas in Communications, Vol. 10, No. 2, Feb. 1992, pages 418-427, discloses a satellite communications system wherein a plurality of satellites in different low Earth orbits is used. The satellites are capable of storing a message and of forwarding a stored message. The satellites are arranged to communicate with relay stations via up-lkks and down-links.

**Table A1**

| **Services and Demand Segments** | | | |
|---|---|---|---|
| *Segment* | *Service* | *Message Type* | *Description* |
| Transportation | TracSat™, SecurSat™ | Short, frequent status and location messages | Messaging and location for trucking, maritime and railroads |
| | | | |
| Remote monitoring | SecurSat™ | Short telemetry messages and status monitoring | Pipeline, environmental and agricultural monitoring |
| | | | |
| Industrial/utility | SecurSat™ | Short telemetry messages and status monitoring | Monitor plant facilities, utilities and meters in remote locations |
| | | | |
| Personal/business communications | MailSat™, PageSat™ | Alpha-numeric messages, short-medium length E-mail messages | Alpha-numeric paging, E-mail and mobile computing for frequent business travelers |
| | | | |
| Commercial/residential security | SecurSat™, EmerSat™ | Short alarm notification messages | Stolen assets and security breaches; accident notification, etc. |

**Table A2**

| **U.S. Domestic Market for NVNG MSS Services:** (All entries in U.S. Dollars) | |
|---|---|
| **TracSat™** | |
| Trucking | 2.5MM |
| Maritime | |
| Commercial | 50K |
| Yachts | 50K |
| Recreational | 370K |
| Boxcars and containers | 5MM |
| | |

| **SecurSat™** | |
|---|---|
| Oil and gas wells | 900K |
| Pipeline monitoring sites | 220K |
| Government data gathering stations | 100K |
| Utility meters | 150MM |
| | |

| **MailSat™** | |
|---|---|
| Frequent business travelers | 1MM |
| | |

| **PageSat™** | |
|---|---|
| Nationwide paging subscribers | 240K |
| | |

| **EmerSat™** | |
|---|---|
| Emergency road service subscribers | 50MM |

An appreciation of other aims and objectives of the present invention and a more complete and comprehensive understanding of this invention may be achieved by studying the following description of a preferred embodiment and by referring to the accompanying drawings.

### A BRIEF DESCRIPTION OF THE DRAWNGS

Figure 1 is a schematic view of a constellation of six satellites in equatorial orbit utilized in one of the embodiments of the present invention.

Figure 2 is a schematic view of a constellation of fourteen satellites in equatorial orbit utilized in one of the embodiments of the present invention.

Figure 3 is a schematic view of one of the embodiments of the satellites used to implement the present invention.

Figures 4 and 5 are sections of Mercator projections of the Earth's surface showing the areas of coverage between 30 degrees North and 30 degrees South latitude for satellites operating in equatorial orbit.

Figure 6 depicts equatorial relay stations located on the ground between 30 degrees North and South latitude.

Figures 7, 8 and 9 show satellite footprints for constellations that include six, eight and fourteen satellites in equatorial orbit.

Figure 10 reveals the use of ground stations to relay data between satellites in equatorial orbit.

Figure 11 illustrates the use of inter-satellite links to relay data between satellites in equatorial orbit.

Figure 12 reveals the use of both ground stations and inter-satellite links to relay data between satellites in equatorial orbit.

Figure 13 exhibits a mixed constellation of satellites in both equatorial and polar orbits that work in combination with relay stations located near the poles and near the Equator.

Figure 14 depicts another mixed constellation of satellites which includes equatorial orbits and orbits that are inclined sixty degrees to the Equator.

Figure 15 depicts another mixed constellation of satellites which includes equatorial orbits and orbits that are inclined fifty degrees to the Equator.

Figure 16 shows a ground relay station and the five degree elevation angle required by one of the embodiments of the invention.

Figure 17 is a graph of latitudinal reach versus altitude from an equatorial orbit to a fifteen degree elevation angle.

Figure 18 is a diagram of one orbital plane inclined at fifty degrees to the Equator, illustrating a typical orbital altitude of 950 kilometers.

Figure 19 is a diagram of a satellite communicating with relay stations and user terminals by means of uplink and downlink transmissions.

Figure 20 is a diagram showing various methods of relaying messages and data between relay stations.

Figure 21 depicts the frequencies and bandwidths used in uplink and downlink transmissions between a satellite, a relay station and a user terminal.

Figure 22 is a diagram of the structure of a data packet.

Figure 23 is a functional block diagram of the satellite subsystems and their interconnections.

Figure 24 is a functional block diagram of the message or communications payload".

Figure 25 is shows the satellite antenna gain pattern.

Figure 26 depicts the response characteristics of the terminal-to-satellite downlink transmit filter.

Figure 27 depicts the response characteristics of the relay station-to-satellite downlink transmit filter.

Figure 28 is a diagram showing possible combinations of the modern module with other modules in a user terminal.

Figure 29 is a block diagram of the modem module.

Figure 30 is a diagram of the gain pattern of a typical user terminal antenna.

Figure 31 is a functional block diagram of a relay station.

Figure 32 depicts a typical gain pattern of a relay station antenna.

Figures 33 and 34 are graphs which reveal VHF antenna design trades for a 100W transmitter for altitudes of 1,100 km and 1,856 km, respectively. Figures 35 and 36 present graphs which reveal UHF antenna design trades for a 100W transmitter for altitudes of 1,100 km and 1,856 km, respectively.

Figure 37 shows mean and maximum response times for four satellites at different altitudes and latitudes.

Figure 38 exhibits the percent of time that a range of latitude is covered by four satellites moving in equatorial orbits.

Figure 39 depicts mean and maximum response times for six satellites at various latitudes.

Figure 40 shows the percent of time that a range of latitude is covered by six satellites moving in equatorial orbits.

Figure 41 displays mean and maximum response times for eight satellites at various latitudes.

Figure 42 portrays the percent of time that a range of latitude is covered by eight satellites moving in equatorial orbits.

Figure 43 supplies a graph which illustrates the altitude required for thirty-five degree latitude coverage at a specified elevation angle.

Figures 44, 45 and 46 provide schematic block diagrams of electronics that utilized to implement one of the embodiments of the invention. Figure 44 shows the VHF only payload, Figure 45 shows dual VHF and UHF link sizing circuitry and Figure 46 shows a combined VHF and UHF payload diagram.

Figure 47 shows how satellites transfer data from an equatorial to an inclined orbit via a crosslink through a relay station.

Figures 48, 49 and 50 are diagrams showing satellite footprints for satellites orbiting at 800 km, 1,100 km and 1,852 km altitudes.

Figures 51, 52 and 53 portray mean and maximum response times for satellites orbiting at 800 km, 1,100 km and 1,852 km altitudes.

Figure 54 presents a payload block diagram.

### BEST MODE FOR CARRYING OUT THE INVENTION

### I. An Equatorial Constellation of Satellites

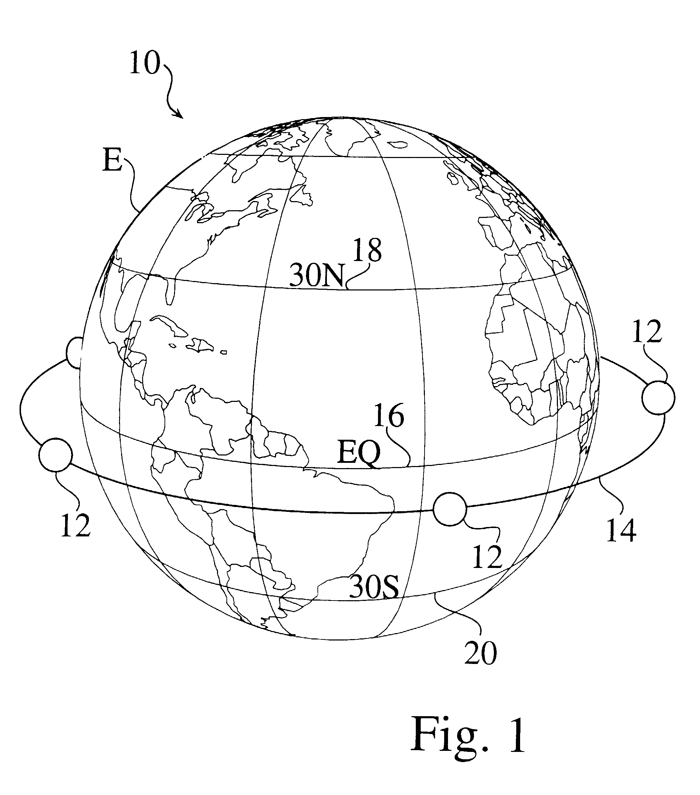

Figure 1 is a schematic view 10 of a constellation of six satellites 12 utilized in one of the embodiments of the present invention. In the text that follows. the term "constellation" refers to the entire group of satellites 12. A complete implementation of the invention which incorporates the constellation as well as equipment such as relay stations on or near the Earth's surface is described by the terms "system" or "network".

The satellites 12 shown in Figure 1 operate in an orbit 14 which lies in the same plane as the Earth's Equator 16. In one embodiment, the satellites 12 are equally spaced around an equatorial orbit at an altitude of 1,852 kilometers. In this specification, constellations having different numbers of orbital planes and various populations of satellites 12 in those orbital planes are disclosed. While a variety of numbers of orbit planes and satellites may be employed to implement the present invention, the reader should understand that the invention embraces any configuration that does not utilize geo-stationary spacecraft flying in orbits at an altitude of approximately 23,000 miles, except for using geo-stationary spacecraft as a communications link.

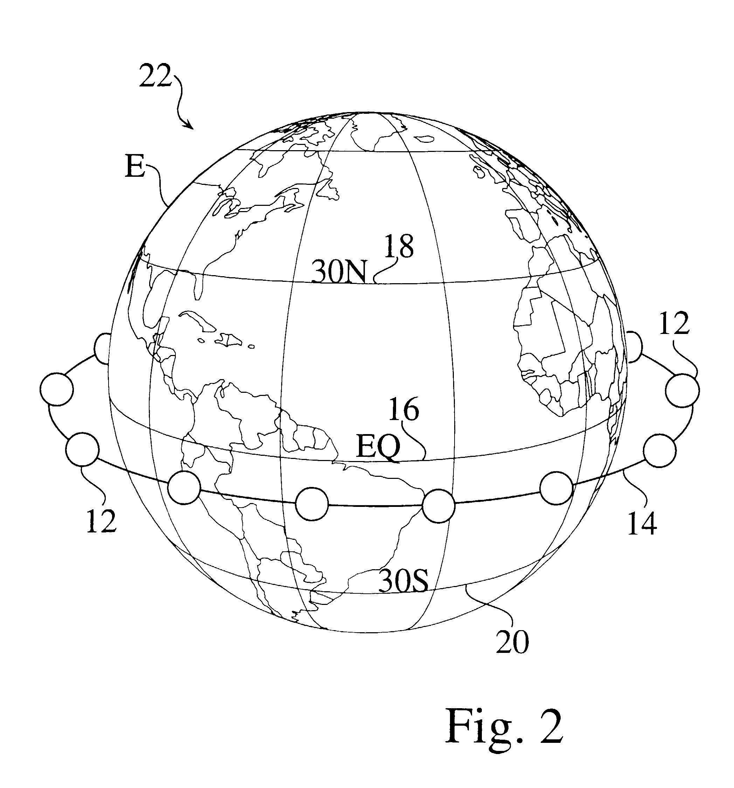

Figure 1 shows two lines of latitude, indicated by reference characters 18 and 20, on the surface of the Earth. These lines represent 30 degrees North and 30 degrees South, respectively. The region of the Earth's surface bounded by these line of latitude 18 and 20 are within the service areas of the satellites 12 in the equatorial orbit 14. Figure 2 reveals an illustration 22 of one embodiment of the invention using fourteen equally spaced satellites 12 operating in equatorial orbit 14. The preferred embodiment of the present invention may utilize from six to fourteen satellites 12 in equatorial orbit 14.

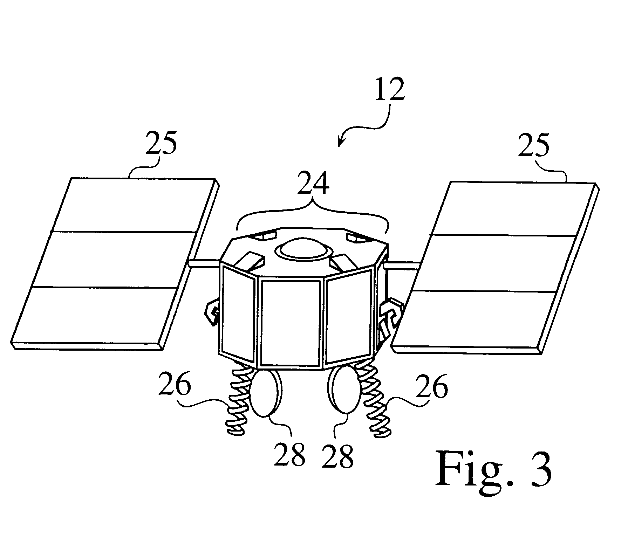

Figure 3 is a schematic depiction of a satellite 12 that may be employed in one of the embodiments of the invention. This satellite 12 comprises a body 24, solar panels 25, a pair of helical antennas 26 and inter-satellite link antennas 28.

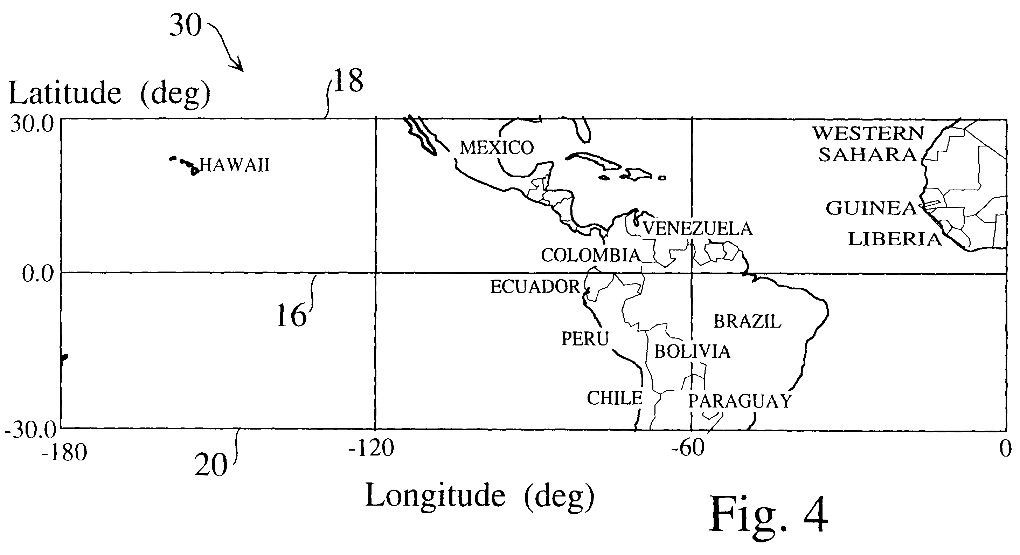

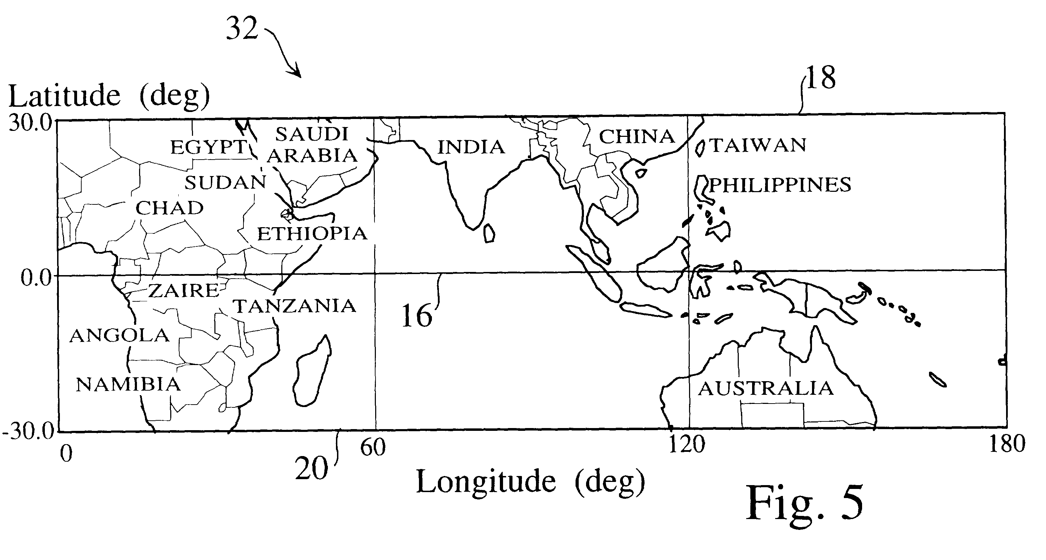

Figures 4 and 5 are maps 30 and 32 showing regions of the Earth which lie between 30 degrees North and 30 degrees South latitude.

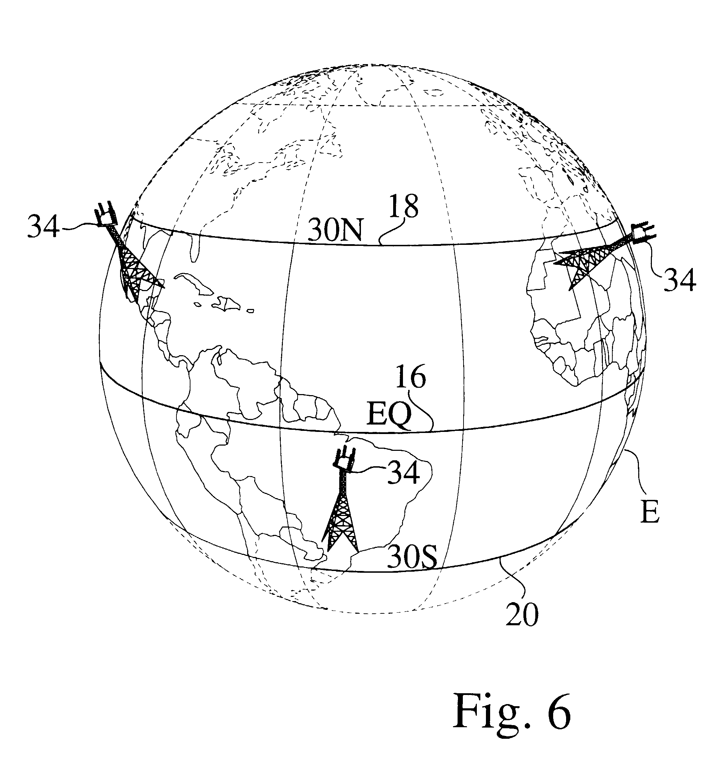

Figure 6 is a schematic diagram which exhibits relay stations 34 located on ground within 30 degrees of the Equator. These equatorial relay stations 34 are capable of communicating with the satellites 12 in the equatorial orbit via uplinks 35a and downlinks 35b.

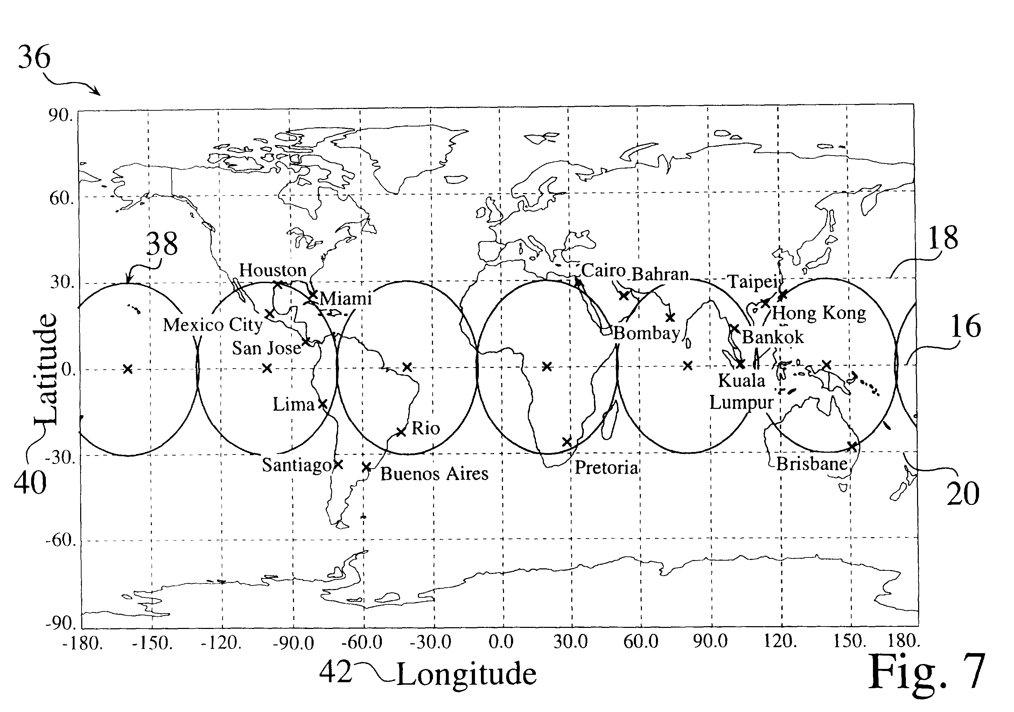

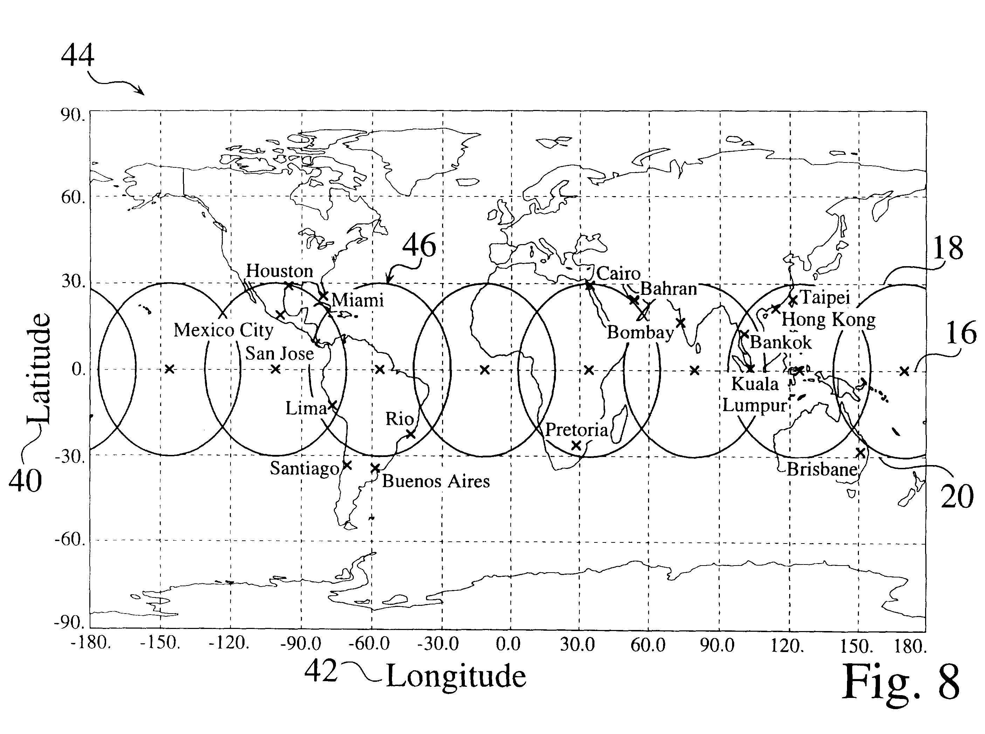

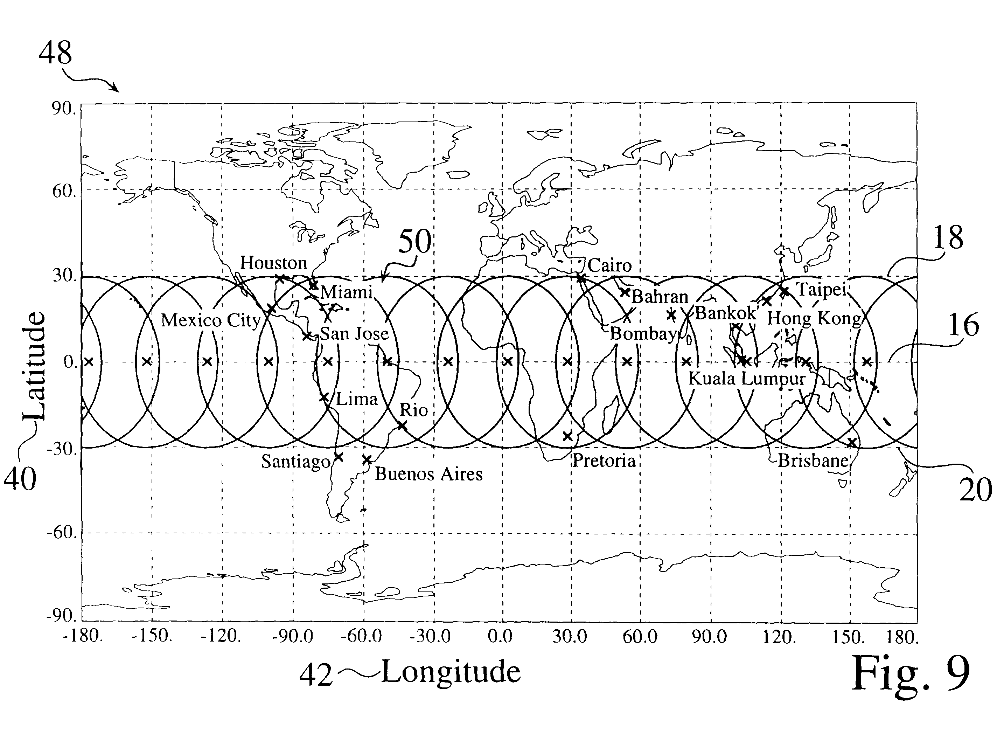

Figures 7, 8 and 9 are maps 36, 44 and 48 that portray footprints 38, 46 and 50 which result from radio beams directed toward the Earth by satellites 12 flying in equatorial orbit 14 at an altitude of 1,852 km. The footprints 38, 46 and 50 are produced by constellations of six, eight and fourteen satellites 12, respectively. Degrees of latitude are shown along the vertical axis, and are delineated by reference character 40, while degrees of longitude are shown along the horizontal axis, and are indicated by reference character 42.

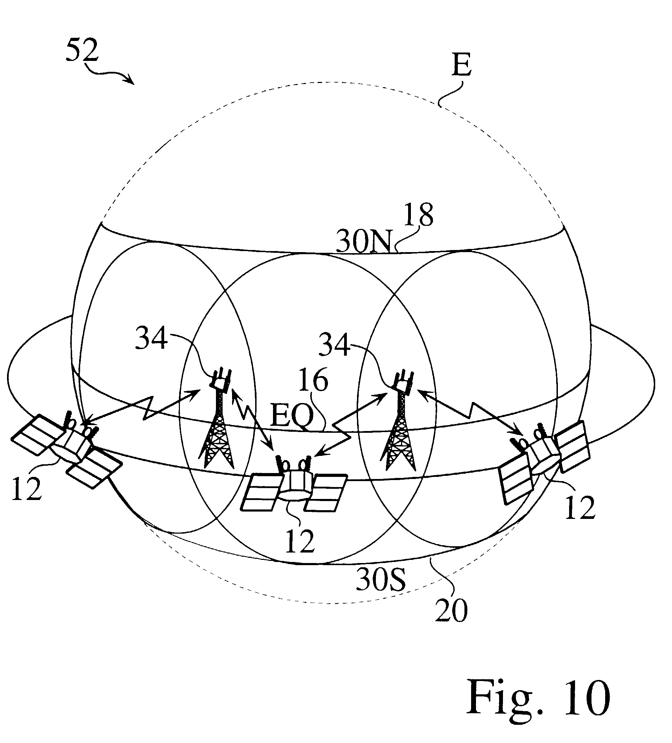

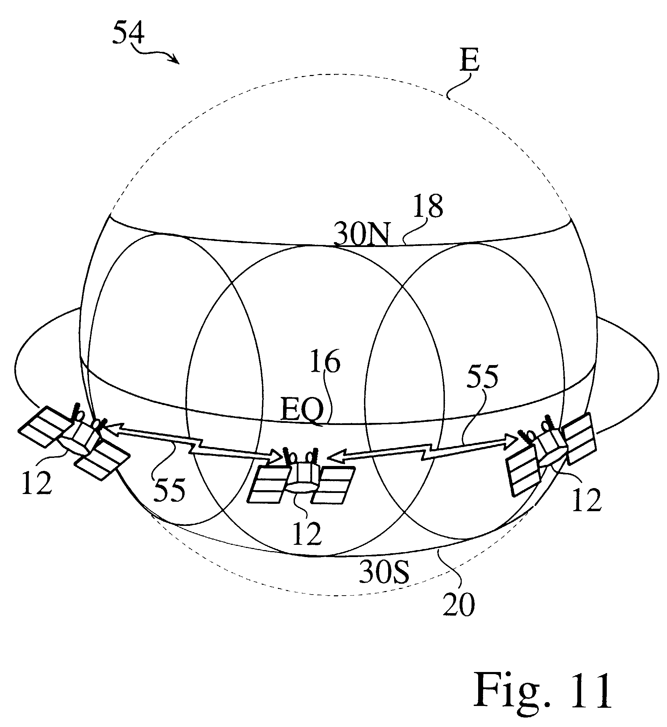

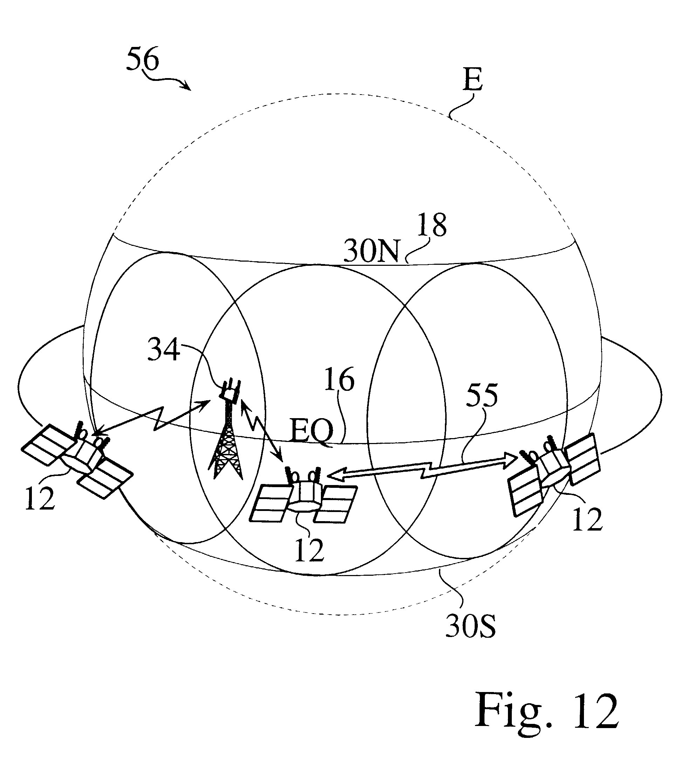

Figure 10 is a schematic representation 52 of satellites 12 in equatorial orbit 14 which work in combination with relay stations 34 on the Earth E to send data over uplinks 35a and downlinks 35b. Figure 11 is a diagram 54 which shows satellites 12 communicating over inter-satellite links 55. Figure 12 reveals a diagram 56 of satellites 12 in equatorial orbit 14 using a combination of ground relay stations 34 and inter-satellite links 55 to relay data. Any combination of ground relay stations 34 and inter-satellite links 55 may be employed to speed a message throughout a particular orbital plane. This novel use of relay stations 34 and inter-satellite links 55 enables the system to accelerate the delivery of a message payload to its destination instead of waiting for the satellites 12 in the orbit plane 14 to precess around the Earth to its point of delivery.

### II. Combined Constellation Including Equatorial, Polar & Inclined Orbits

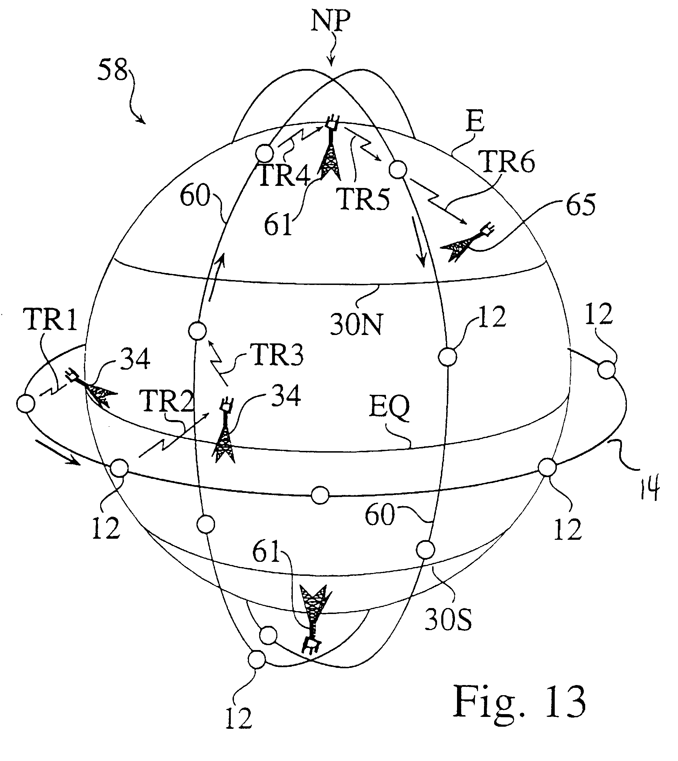

Figure 13 reveals an illustration 58 of satellites 12 which occupy both equatorial and polar orbits 14 and 60. Relay stations on the ground situated in both the equatorial and polar regions 34 and 61 are used to convey messages across orbits.

Figure 13 shows an embodiment which uses both equatorial and polar orbits 14 and 60. In the discussion that follows, relay stations referred to as "equatorial relay stations" are generally located within thirty degrees of the Equator. "Polar relay stations" are those situated near the North or South Poles. "Middle-latitude relay stations" are those which provide uplinks and downlinks that are not handled by either the equatorial or polar relay stations.

The embodiment shown in Figure 13 offers a system for transmitting a message through a series of equatorial, polar and middle-latitude relay stations 34, 61 and 65. A first satellite 12 traveling in the equatorial orbit 14 receives and stores a message from a first equatorial relay station 34. This communication is indicated as an uplink transfer TR1 in Figure 13. The first satellite continues eastward in its equatorial orbit after this first uplink, and then sends the message down to a second equatorial relay station 34 via downlink TR2. Once the satellite in polar orbit passes within range of this second equatorial relay station, an uplink TR3 occurs, and a satellite heading for the North Pole carries the message northward. Once this satellite in polar orbit passes over a polar relay station 61, downlink TR4 drops the message back to Earth. The same polar relay station 61 then sends the message up in transfer TR5 to a satellite flying south in a neighboring polar orbit 60. This southbound satellite finishes the store-and-forward relay process by dropping the message to middle-latitude relay station 65 via downlink TR6. Any of these relays could be accelerated by intermediate caroms to other ground relay stations or by using inter-satellite links 55.

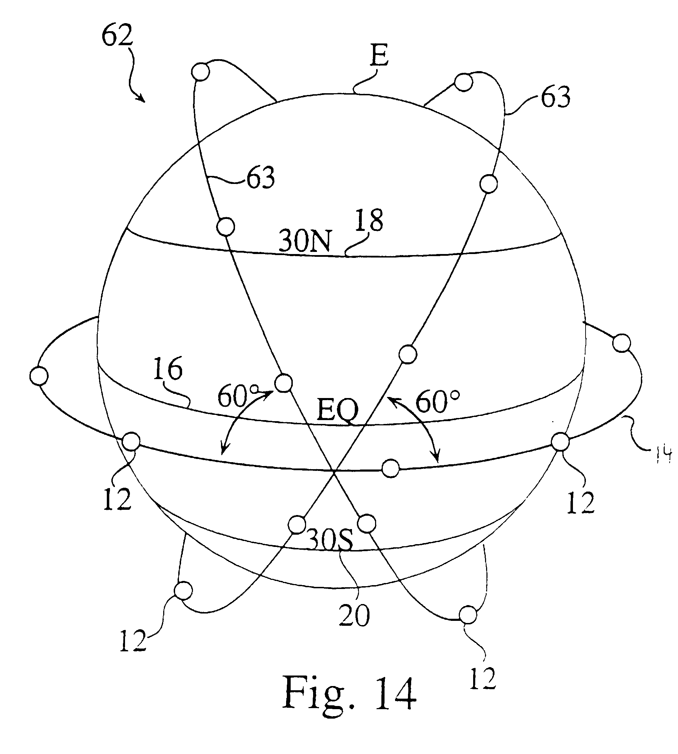

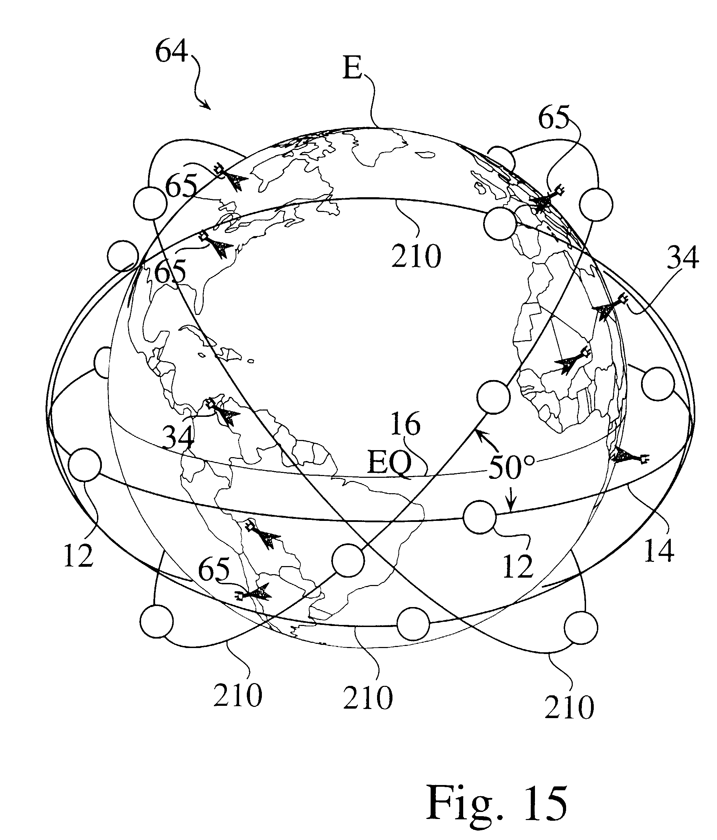

Figures 14 and 15 supply diagrams 62 and 64 of combined fleets of satellites comprising both equatorial 14 and inclined orbits 63, 210. The inclined orbits 63 shown in Figure 14 are inclined sixty degrees to the Equator, while those shown in Figure 15 are inclined fifty degrees to the Equator. Figure 15 is a perspective diagram of another constellation of satellites which includes equatorial orbits 14 and orbits 210 inclined at fifty degrees to the Equator and in which the relay stations are distributed internationally in a pattern of locations on the Earth which maximize coverage and minimize time to forward messages and data between any two user terminals. While the present invention may use any combination of equatorial and inclined orbits, orbits inclined from fifty to sixty degrees from the Equator have been selected for the preferred embodiment.

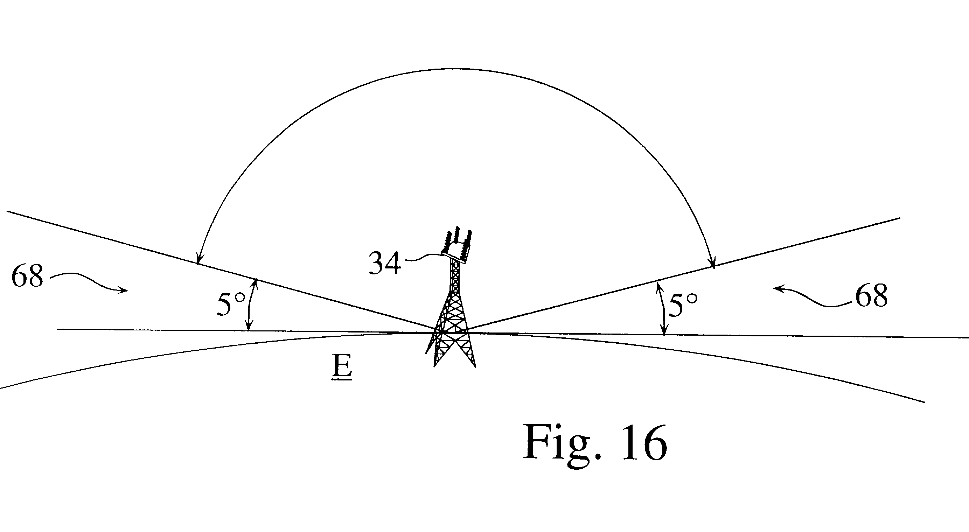

Figure 16 illustrates the elevation angle 68 of approximately five degrees which is required for reliable operation of the present invention. The elevation angle 68 is the angle measured from the local horizon at a terrestrial terminal such as a relay station 34 up to the region of the sky where the relay station 34 will be capable of communicating with one of the satellites 12 in the constellation.

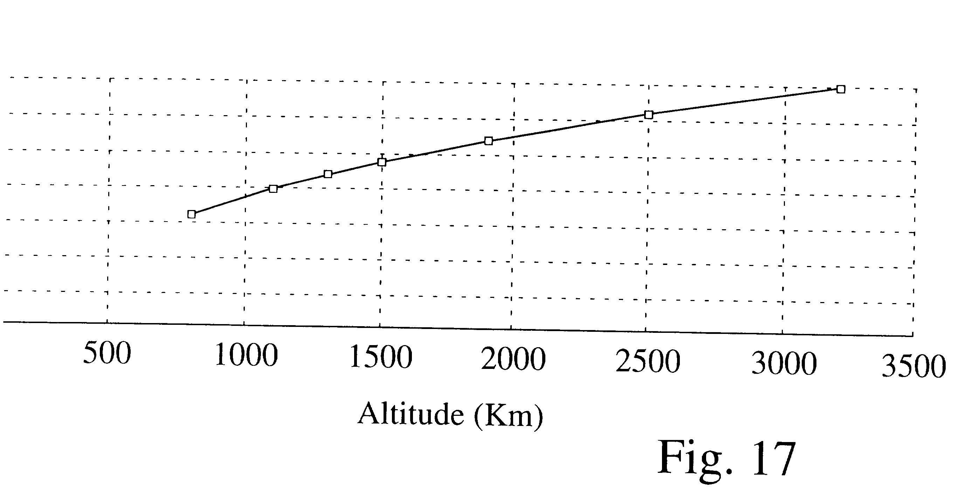

Figure 17 is a graph of latitudinal reach versus altitude from an equatorial orbit to a fifteen degree elevation angle.

### III. Earth Segment Description

### Distributed Relay Stations

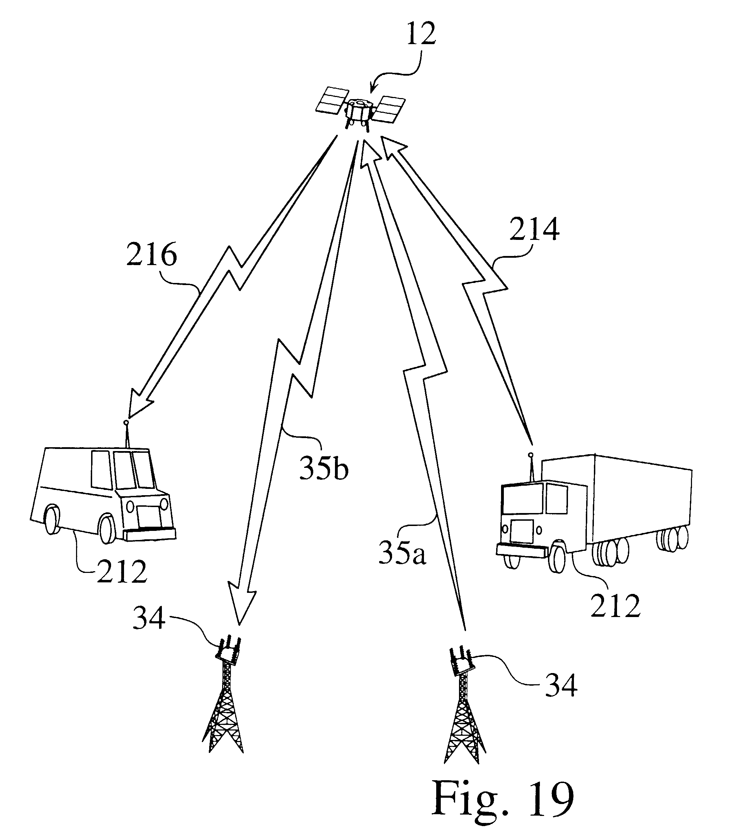

As shown in Figure 15, a preferred embodiment 64 of the present invention employs approximately ten to one hundred "distributed" relay stations 34 The relay stations 34 are distributed internationally in a pattern of locations on the Earth E which maximize coverage and minimize time to forward messages and data between any two user terminals 212, as shown in Figure 19. The relay stations are linked together in several ways is discussed below under the heading "Communication Links and Protocols".

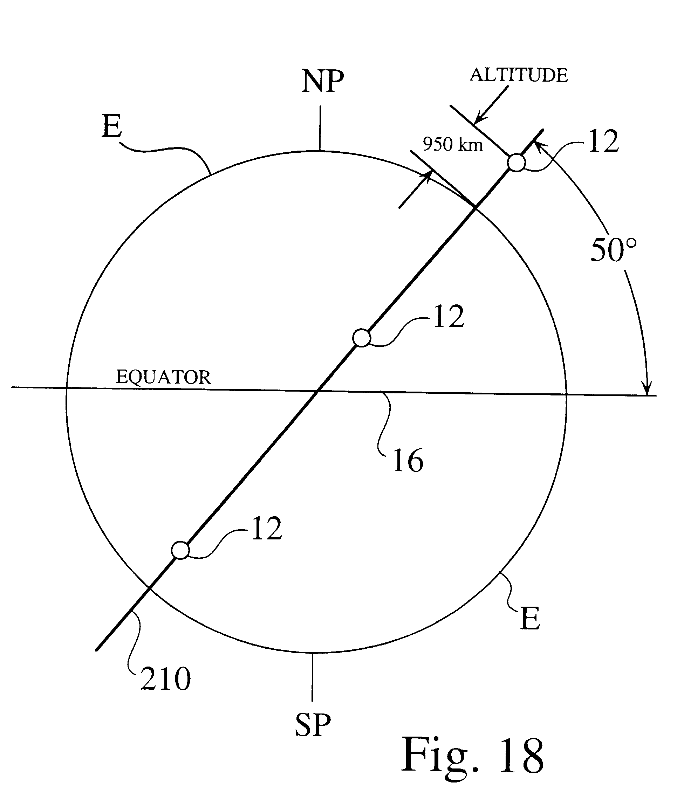

Figure 18 shows one of four orbital planes which are inclined at fifty degrees to the Equator. In this embodiment, six equally spaced satellites 12 are placed in each circular, orbital plane 210 at an altitude of 950 kilometers (km). In this embodiment, there is no overlap of the satellite 12 radio beam footprints between satellites 12 in the fifty degree inclined orbits. Ground control of frequency assignments will prevent interference between satellites in these orbits and satellites in equatorial orbit 14.

### IV. Communications Links and Protocols

The present invention comprises a satellite system that will provide store-and-forward coverage of virtually all locations on the Earth's surface. The following discussion is based on one preferred embodiment 64 (refer to Figure 15) in which the constellation includes twenty-four satellites 12 in four orbital planes, equally spaced around the Equator and inclined at 50 degrees. In this preferred embodiment 64, each orbital plane contains six equally spaced satellites in a circular orbit at an altitude of 950 km. While the detailed information in respect of power requirements, surface footprints of each satellite's radio beams, and the like are specific with respect to this embodiment, it will be appreciated by those skilled in the an that the methods and apparatus described are equally applicable to other embodiments having different constellations or orbital planes.

User terminals 212 are distributed randomly, primarily in portions of the Earth E which are inhabited. In Figure 19, a primary method of communication between subscribers operating user terminals 212 is shown. A subscriber communicates with a satellite 12 by means of a user terminal-satellite uplink (TSU) 214. The satellite stores the message and forwards it at a later time to another subscriber by means of a user terminal-satellite downlink (TSD) 216. To reduce the time for delivery, the satellite is able to send the message to a relay station 34 through a relay station-satellite downlink (RSD) 35b. The relay station 34 retransmits the message to a second satellite 12 in an orbit 210 which will more quickly pass nearby to the addressee. The retransmission is through a relay station-satellite uplink (RSU) 35a. The second satellite 12 at a later time sends the message to the addressee through a user terminal-satellite downlink (TSD) 216.

In Figure 19, relay station 34 is a message-forwarding terminal, since it holds a message from a subscriber obtained by means of a relay station-satellite downlink 35b transmission. The relay station 34 may hold this message until another satellite in the constellation comes within range or, depending on the destination it may forward the message by one of the relay means described below.

### Distributed Linked Relay Stations

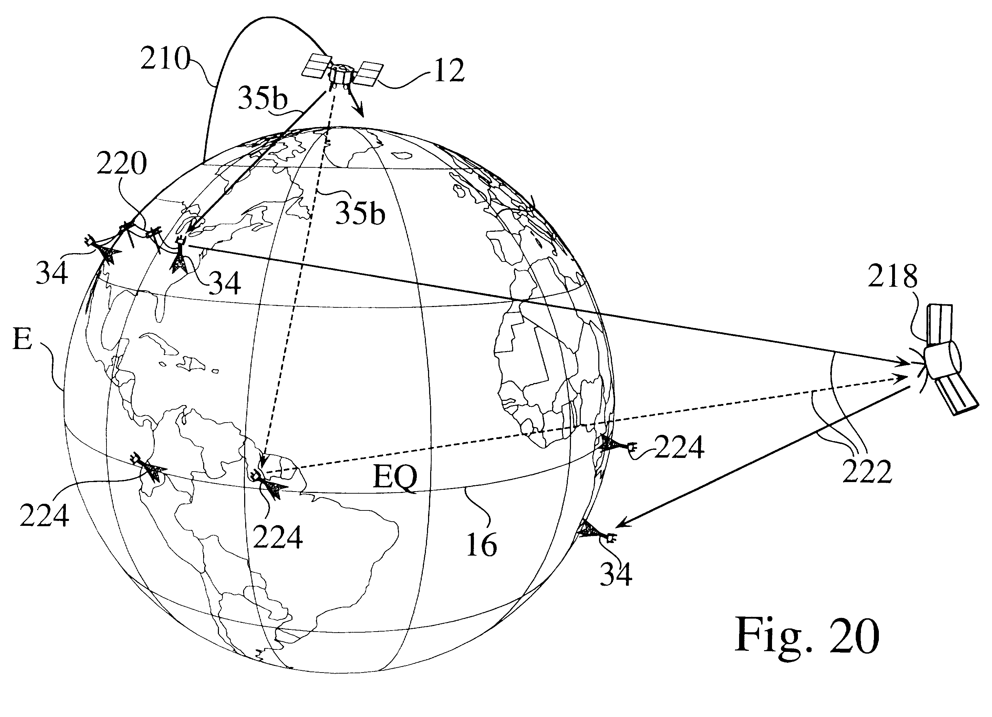

The relay stations 34 are distributed internationally in a pattern of locations on the Earth E which maximize coverage and minimize time to forward messages and data between any two user terminals 212. To reduce the time of delivery of message traffic even further, the distributed relay stations 34 may be linked together in several ways as depicted in Figure 20.

In one alternative embodiment, a group of equatorial relay stations 224, eight to twelve in number, are spaced along the Equator 16. These equatorial relay stations 224 are used to store and forward traffic sent from satellites travelling in opposite directions in orbits 210 inclined by fifty to sixty degrees. This method is similar to the method used by the polar relay stations 34 to store and forward traffic from satellites in more steeply inclined or polar orbits 60.

In another alternative embodiment, relay stations 34 are linked through a geostationary communication satellite 218 by use of very small aperture terminals (VSAT's). In a variation of this embodiment, large low Earth orbit communications satellites may be used for these linkages in place of the much higher altitude geostationary satellites 218.

In still another alternative embodiment, relay stations 34 are linked through public, switched telephone networks 220, which are available in most of the developed world. To provide a great deal of system reliability, certain relay stations 34 can function as a message-forwarding station, or a network operation control center (NOCC). For example, if the message held at a relay station in New York is addressed to an addressee in California, the message may be forwarded by the public, switched telephone network 220.

The ability of a relay station 34 to select among alternative network means to forward messages enables the provision of an "auction protocol" for users. In its initial communication with a user, the satellite 12 "announces" the level of traffic it is currently accepting. The level of traffic is varied from, say level one, the fastest and most expensive mode of delivery to the next fastest and less expensive mode of delivery and so on until the slowest and least expensive level is reached. A user can, therefore, elect to send a message at the highest level of service, or wait for a cheaper, lower level of service. This protocol is further discussed in the section describing the user terminal-satellite downlink 216 protocol.

The satellite system (52, 54, 56, 58. 62, 64) will be distinguished by the range of services offered, the low cost of its service options relative to those offered by similar proposed service providers and its high spectral efficiency. The types of services provided by the present invention include tracking and monitoring for the transportation industry, monitoring of remote assets or site locations, such as vehicles, boats and vacation homes or remote utility equipment, E-mail, paging and emergency services.

### Telecommunication Frequencies and Spectrum

The present invention has been designed from the outset to make efficient use of the scarce spectrum available. Table A3 below summarizes the total spectrum available in the U.S. for this type of service, resulting from the allocations made at WARC-92 and in the Commission's Order allocating spectrum for the NVNG MSS.

**Table A3 -**

| **MSS Frequency Allocations Below 1 GHz** | |
|---|---|
| **Earth-to-Space** | **Space-to-Earth** |
| 148.000 to 150.050 MHz | 137.000 to 138.000 MHz |
| 399.900 to 400.050 MHz | 400.150 to 401.000 MHz |

This amounts to a total of 2.2 MHz for the Earth-to-space links (uplink) and 1.85 MHz for the space-to-Earth links (downlink). However, parts of this available spectrum are only allocated on a secondary basis to the MSS service, and even the primary MSS allocations are allocated on a co-primary basis to other services, such as Fixed, Mobile, Meteorological-Satellite, Space Operation, Space Research and Meteorological Aids. The ability of the system to effectively and efficiently share the spectrum in this type of environment is therefore of paramount importance.

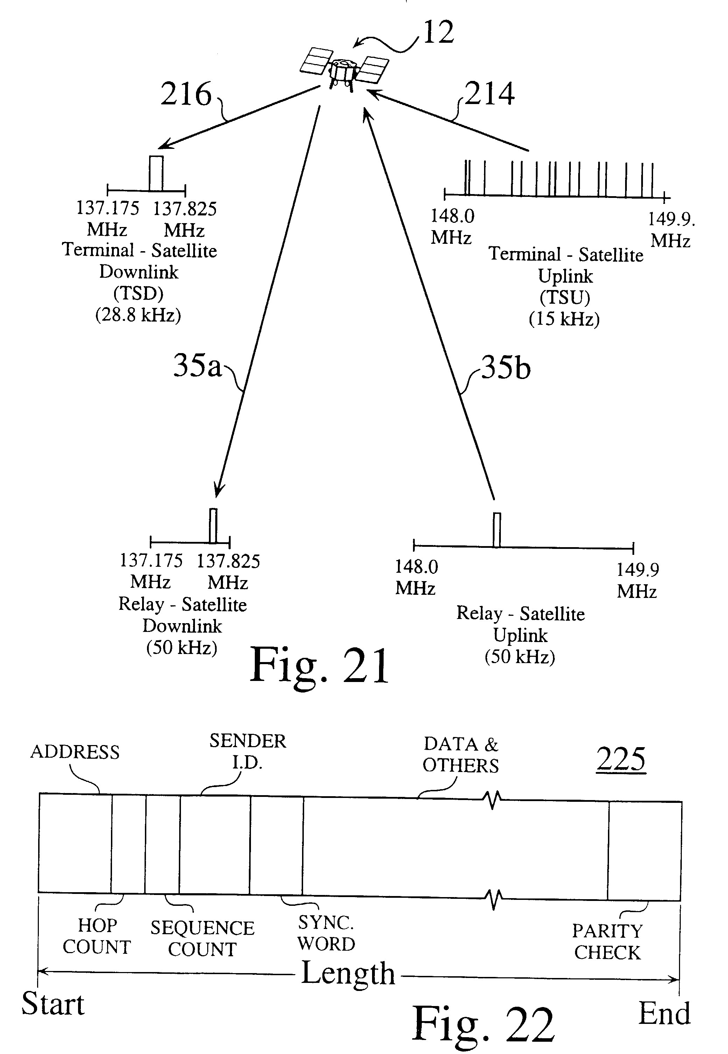

Figure 21 graphically depicts the frequencies and bandwidths at which the satellite system will communicate messages. The TSUs and the RSUs will operate in the 148-149.9 MHz band and the TSD and RSD will operate in the 137.175-137.825 MHz band. All of the links will carry "packetized" digital data. Network packets will be used for resource request and assignment, and other network control functions. Monitoring packets will be used for monitoring applications. Text packets will be used for message applications. The Text packet length will be selected to comply with footnote US323 to the Frequency Allocation Table. 47 C.F.R. §2.106. Footnote US323 requires that, in the 148-149.9 MHz band, single transmissions from individual Earth stations may not exceed 450 msec in duration (4160 bits/9.6 kbps=433.3 msec).

Frequency assignments for the satellite downlinks (35b. 216) will be in four segments. That is, for all satellites 12 in a given orbital plane 210, the frequencies will be the same. Because of no overlap in the radio beam footprints of the six satellites 12 travelling in each fifty degree inclined orbit 210, there is no interference between these satellites 12. Ground control of frequency assignments will prevent interference between satellites 12 in these orbits and satellites 12 in equatorial orbit 14.

In this embodiment 64, since satellites 12 in sectors of orbits 210 on the same side of the Earth E will be transmitting on the same frequencies without interference from other satellites 12, it is possible to reduce the bandwidth of the TSD downlink signal spectrum to one-fourth of that used in some other embodiments.

Each satellite 12 in this embodiment 64 has six receive channels. Other embodiments may require up to fifteen receive channels. The method of channel assignment to the user terminal transmitters is discussed below in the Section entitled "Dynamic or Adaptive Channel Assignment".

### Data Transmission

Figure 22 is a packet structure diagram 225 showing the information contained in certain fields. For example, the first field may contain the address of the recipient. The second field may contain the "hop" count or how many relays have occurred to the current time. The next field may contain the sequence count or frame number. The fourth field may contain the sender's identification, and so on. Table A4 below describes the packet structures.

**Table A4:**

| **Packet Structures** | | | |
|---|---|---|---|
| | **Network** | **Monitoring** | **Text** |
| Data | 12 bytes | 80 bytes | 500 bytes |
| Overhead | 20 bytes | 20 bytes | 20 bytes |
| Total | 32 bytes | 100 bytes | 520 bytes |

The user terminal-satellite link bit error rate objective is 10⁻⁶ and the relay station-satellite link bit error rate objective is 10⁻⁸. The packet overhead bits allow for synchronization, parity check, sequencing, status, and addressing and routing. Forward error correction coding is employed in the store-and-forward system. Raw data bits are mapped into symbols in a manner which results in each symbol containing information about multiple bits. Lost data bits can therefore be recovered.

Each satellite will support six TSUs 214 at a data transmission rate of 9.6 kilobits per second (kbps), one TSD at a data rate of 24 kbps, one RSU 35a at a data rate of 50 kbps, and one RSD 35b at a data rate of 50 kbps. Thus, the user terminals 212 may transmit at 9.6 kbps and receive at 24 kbps. The TSU bandwidth is 15 Kilohertz (KHz) and the TSD bandwidth is 28.8 KHz. The relay stations 34 will transmit and receive at 50 kbps and have a bandwidth of 50 KHz. While the nominal TSU transmission data rate is 9.6 kbps, lower cost user terminals 212 are possible if lower data rates are used. Therefore, data rates as low as 300 bps will be available. For example, a user terminal 212 might transmit at standard data rates of 9600, 4800, 2400, 1200 600 or 300 bps. Besides the low cost and availability of equipment capable of the lower transmission rates, battery power requirements are reduced substantially which makes this method attractive for hand held or periodic reporting user terminals 212. For example, burst power for a 300 bps signal is only about 20 milliwatts compared to about five watts for a 9.6 kbps signal.

The system will use a combination of random access and frequency division multiplexing (FDM) for the TSUs 214 and time division multiplexing (TDM) for the other links. FDM is preferred for the TSUs 214 because it does not require high burst power transmissions from the user terminals 212 that would be required for a single wideband TDM channel. TDM is preferred for the other links because it allows for the use of efficient saturated power amplifiers in the satellites 12 and relay stations 34, 61, 65. Back-off is not required to control intermodulation levels since there will be only a single RF carrier in these links.

All of the links will use differentially encoded offset-quadraphase shift keying (OQPSK) modulation filtered for 50% excess bandwidth in combination with rate 7/8, constraint length 7, convolutional coding. This format has been selected because of its high combined modulation/coding efficiency of 1.17 bits/sec/Hz.

However, frequency shift keying (FSK) modulation is also used on a time-shared basis to support low-cost user terminals 212. A user terminal 212 can use an FSK demodulator absorbing only "trickle" power, *i.e.,* low current, while waiting for a satellite signal to appear. An FSK signal can be sent at reduced data rate, for example 6 kbps, because of a smaller portion of spectrum occupied by an FSK modulated signal. A ground station looks for an ID code in the FSK mode. It can then, if desired, turn on the OQPSK keying demodulator and operate at a faster rate.

The downlink (35a, 216) signal is partitioned into 500 millisecond (ms) frames. Initially, signals are FSK modulated. Later signals in the 500 ms frame may be FSK or OQPSK modulated depending on the demand. The network operation control center NOCC varies the time-sharing between FSK and OQPSK modulation depending on traffic load.

The uplink (35b, 214) signals are OQPSK modulated, although the use of FSK modulation and lower data rates offer some cost reduction.

The required channel bandwidths are a function of the data rate, the spectral efficiency of the modulation and coding, the user terminal or relay station and satellite frequency stability, the uncompensated Doppler shift and the channel filtering. The required channel bandwidths are summarized in Table A5.

**Table A5:**

| **Channel Bandwidth Requirements** | | | | |
|---|---|---|---|---|
| | **User Term. Uplink** | **User Term. Downlink** | **Relay Sta. Uplink** | **Relay Sta. Downlink** |
| Signal Bandwidth | 8.2 KHz | 20.5 KHz | 42.8 KHz | 42.8 KHz |
| +/- Frequency Stability | 0.6 | 0.3 | 0.3 | 0.3 |
| +/- Doppler | 4. 4 | 4.0 | 4.4 | 4.0 |
| Total | 13.2 | 24.8 | 47.5 | 47.1 |
| Channel Bandwidth | 15 KHz* | 28.8 KHz | 50 KHz | 50 KHz |

| | | | | |
|---|---|---|---|---|
| *A single user terminal requires 15 KHz, therefore six simultaneous users require 90 KHz bandwidth. | | | | |

To implement the "auction" protocol, the satellite 12 indicates what level of traffic it is accepting within the 500 ms frame of the first burst of data. User terminals wishing to send that level of traffic will do so. Terminals having lower levels of traffic will wait. The auction protocol sequentially lowers the level of traffic it is accepting until all users desiring the highest to the lowest level of service are accommodated.

The present invention uses a combination of random access and frequency division multiplexing (FDM) for the TSUs and time division multiplexing (TDM) for the other links. FDM is preferred for the TSUs because it does not require high burst power transmissions from the transceivers that would be required for a single wideband TDM channel. TDM is preferred for the other links because it allows for the use of efficient saturated power amplifiers in the satellites and gateways. Back-off is not required to control intermodulation levels since there will be only a single RF carrier in these links.

### Dynamic or Adaptive Channel Assignment

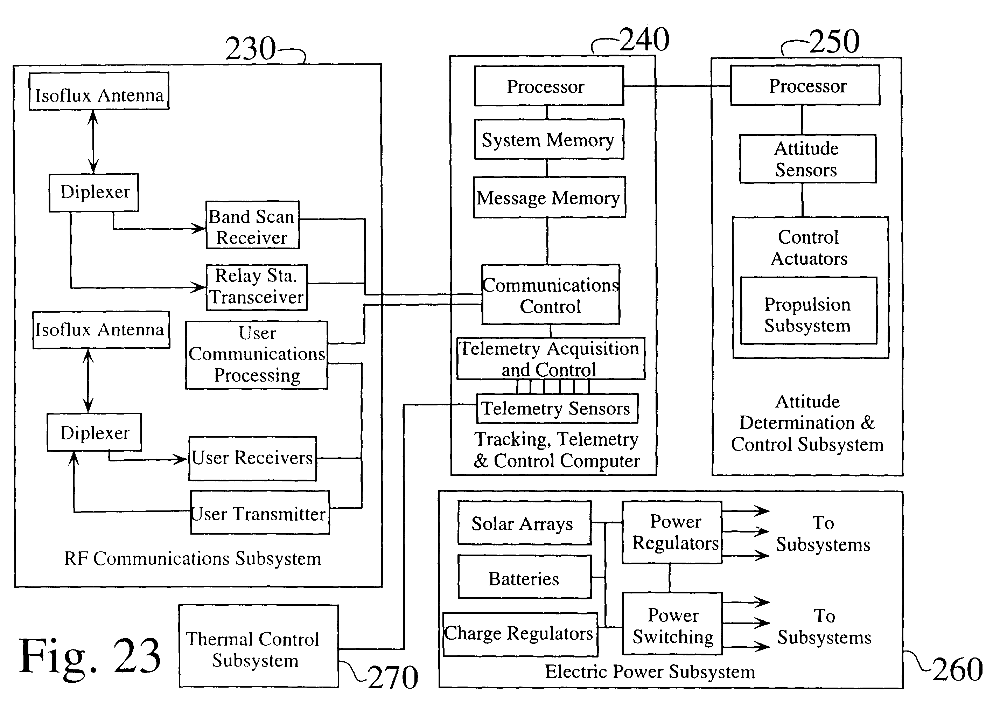

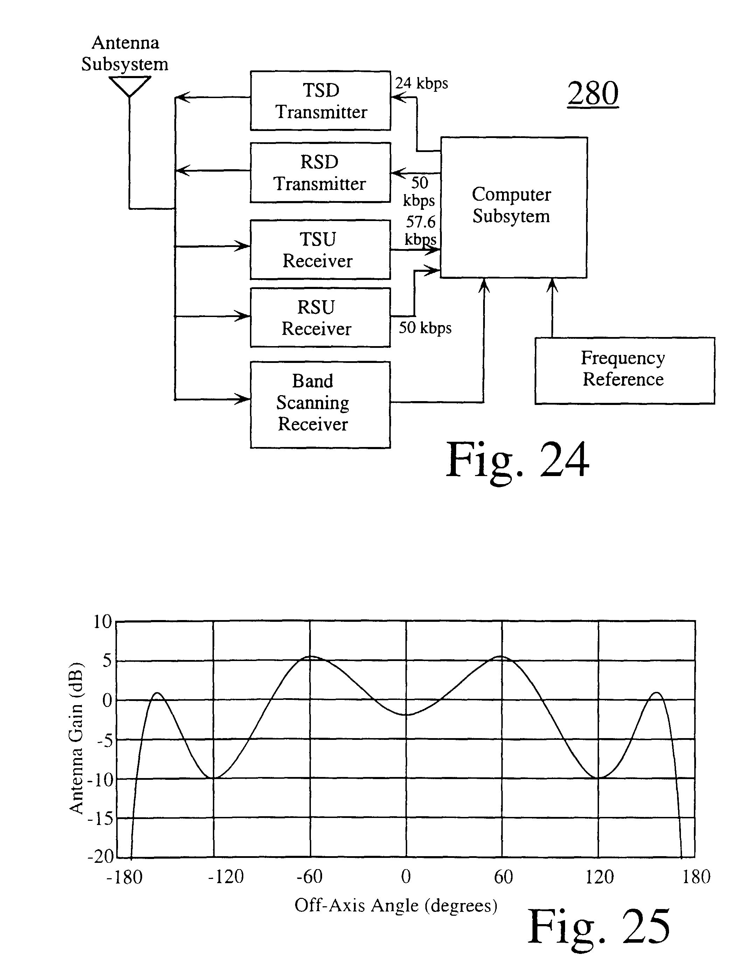

Figure 23 depicts a functional block diagram of the satellite subsystems which includes the RF communications subsystem 230. The communications payload 280 which includes the RF communications subsystem 230 a computer subsystem and a frequency reference, is shown in the block diagram in Figure 24. The satellite 12 monitors the pool of frequencies in the 148.0 to 149.9 MHz band and assigns channels to user terminals 212 as available. A band-scanning receiver contained in the RF communications section 230 of the satellite 12 is a digital spectrum analyzer. The receiver scans the TSU band each 0.5 seconds for TSU signals. The computer subsystem projects channel usage for the next 0.5 seconds and in the first burst of the protocol, instructs a calling user terminal 212 which channel to use. An algorithm is used to make the channel projection based on the half-second sample history.

### Communications Payload Description

A functional block diagram of the communications payload is shown in Figure 24. The antenna subsystem converts the free space propagated waveforms into RF signals for processing by the user terminal-satellite uplink (TSU) receiver, the relay station-satellite uplink (RSU) receiver, and the band scanning receiver. It also converts the RF signals from the user terminal-satellite downlink (TSD) transmitter and the relay station-satellite downlink (RSD) transmitter into free space propagated waveforms. Two transmitting antennas are used, one for the TSD links and the other for the RSD links. This will eliminate the combining loss that would occur if the TSD and RSD signals were radiated from the same antenna.

The spacecraft antennas will be shaped to partially compensate for the changing free space propagation loss due to the range variation that occurs between the time the satellite appears at the lowest elevation angle and the time it is directly overhead. This maximum variation in path loss corresponds to about 7.5 dB in propagation loss. As a result. the preliminary spacecraft antenna design has a gain of -2 dBi in the nadir direction and +5.5 dBi at a fifteen degree grazing angle. The satellite antenna gain pattern is shown in Figure 25. The satellite antennas will be left-hand circular polarized. though right-hand polarization is also possible.

The TSU receiver will downconvert, demodulate, and decode the uplink signals received from the transceivers. The TSU receiver will provide the demodulated packets to the computer subsystem at 57.6 kbps for processing. The RSU receiver will perform the same functions for the RSU channel.

The TSD transmitter RSD will accept packetized data from the computer subsystem at 24 kbps. encode and modulate the data, upconvert it to the transmit channel, frequency. and provide 20 watts of transmit power using a solid-state power amplifier (SSPA). The RSD transmitter will perform the same functions for the 50 kbps RSD data using a 2.5W SSPA.

The band scanning receiver will scan the potential transceiver-satellite uplink channels in the 148-149.9 MHz band 15 KHz increments to determine channel activity and signal levels. The six least active channels will be identified twice per second and this information will be broadcast to the transceivers.

The frequency reference subsystem will provide stable frequency and time signals to the other functions. The computer subsystem will process all of the received packets, store them in memory, and retransmit them as required. It also will use the data from the band scanning receiver to make TSU channel assignments.

Key communications payload 280 parameters are shown in Table A6.

**Table A6:**

| **Key Satellite Communications Payload Parameters** | |
|---|---|
| Antenna | |
| Nadir Gain | -2 dBi |
| Edge of Coverage Gain | 5.5 dBi |
| Edge of Coverage Beamwidth | 111 degrees |
| Polarization | LHC |
| | |

| TSD Transmitter | |
|---|---|
| Frequency Band | 137.175-137.825 MHz |
| Number of Channels | 1 |
| Transmit Power | 20 W |
| 99% Power Channel Bandwidth | 20.5 KHz |
| Data Rate | 24 kbps |
| | |

| RSD Transmitter | |
|---|---|
| Frequency Band | 137.175-137.825 MHz |
| Number of Channels | 1 |
| Transmit Power | 2.5 W |
| 99% Power Channel Bandwidth | 42.8 KHz |
| Data Rate | 50 kbps |
| | |

| TSU Receiver | |
|---|---|
| Frequency Band | 148-149.9 MHz |
| Number of Channels | 6 |
| Channel Bandwidth | 15 KHz |
| Per Channel Data Rate | 9.6 kbps to 300 bps, variable |
| Noise Figure | 4 dB |
| | |

| RSU Receiver | |
|---|---|
| Frequency Band | 148-149.9 MHz |
| Number of Channels | 1 |
| Channel Bandwidth | 50 KHz |
| Per Channel Data Rate | 50 kbps |
| Noise Figure | 4 dB |
| | |

| Band Scanning Receiver | |
|---|---|
| Frequency Band | 148-149.9 MHz |
| Number of Channels | 1 |
| Channel Bandwidth | 15 KHz |
| Noise Figure | 4 dB |
| | |

| Frequency Reference | |
|---|---|
| Frequency Stability | 0.1 PPM over environment and time |
| | |

| Computer | |
|---|---|
| Memory | 16 Mbytes |

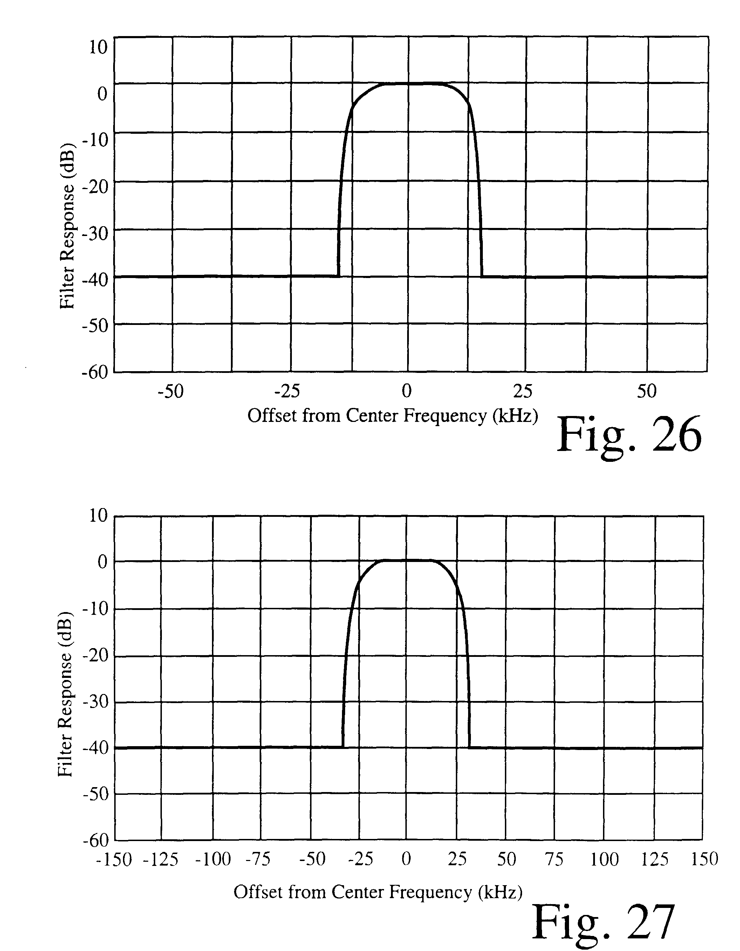

The TSD and RSD transmitter filters response characteristics are shown in Figures 26 and 27 respectively. These filters protect the radio astronomy service in the 150.05-153 MHz and 406.1-410 MHz bands from harmful interference by limiting spurious emissions in those bands.

Because the spacecraft will be processing satellites, it will be impossible for signals received from sources outside of the network to cause output signals different from intended output signals.

### V. User Terminals

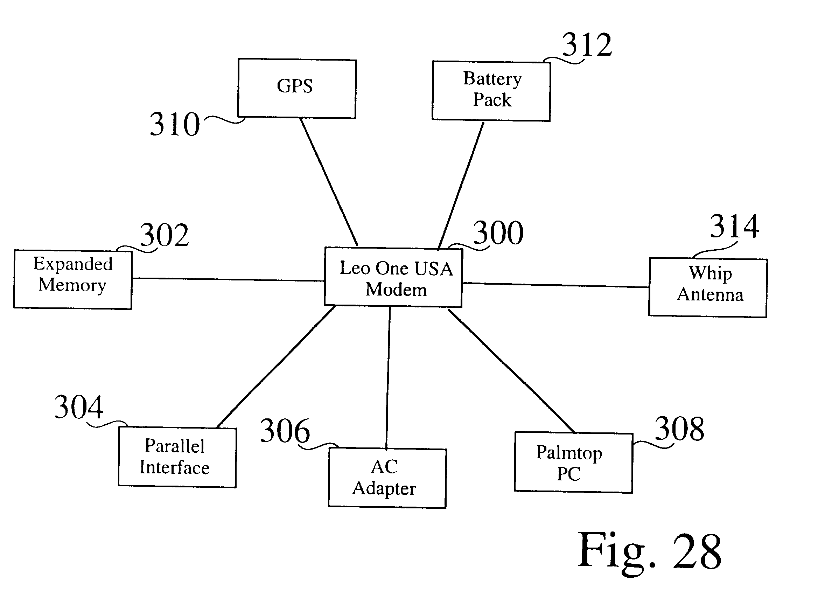

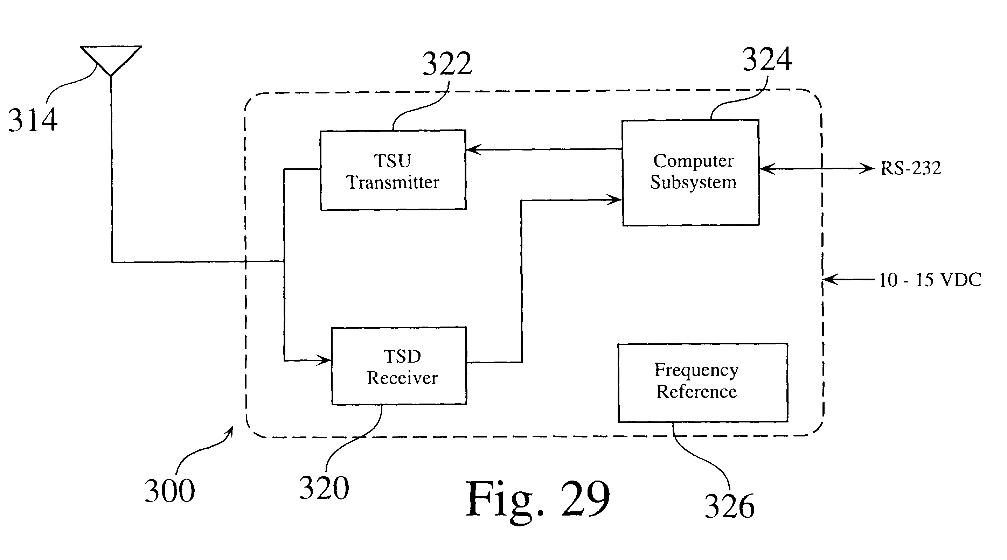

As illustrated by Figure 28, the present invention will provide a family of low-cost user terminals or transceivers to support a variety of different applications. The heart of these transceivers is the modem module 300. The modem 300 will be small, less than ten cubic inches, and capable of battery operation. It will be available in pocket-sized, desktop, and vehicle mounted transceiver configurations. Application-specific transceiver configurations will be constructed by combining the modem module 300 with other modules, as shown in Figure 28. A schematic illustration of the modem module 300 is provided in Figure 29. Table A7 provides examples of how these modules might be combined for different applications, although other combinations are possible. Prices for a basic transceiver are expected to be under US$500.

**Table A7:**

| **Possible Module Combinations for Different Applications** | | | | | | | | |
|---|---|---|---|---|---|---|---|---|
| **Applications** | **Leo One Modem** | **Battery Pack** | **Whip Antenna** | **AC Adapter** | **Expanded Memory** | **GPS** | **Parallel Interface** | **Palmtop PC** |
| Status Monitoring | X | X | X | | | | X | |
| Vehicle Tracking | X | | | | | X | | |
| Paging | X | X | X | | | | | |
| E-Mail | X | X | X | | X | | | X |
| Security Monitoring and Control | X | X | X | | | | X | |
| Emergency Alerting | X | | X | X | | | | |

### User Terminal Technical Parameters

The modem module 300 will interface directly with an antenna. In most applications, the standard antenna will be a normal-mode helix similar to those used with conventional hand-held VHF transceivers. In vehicle mounted applications, the standard vehicle FM radio antenna or an enhanced replacement will be used.

The TSD receiver will downconvert, demodulate, and decode the 24 kbps satellite downlink channel. The TSU transmitter will accept packetized data from the computer subsystem at rates variable from 9.6 kbps to 300 bps, encode and modulate the data, upconvert it to the transmit channel frequency, and provide about 5W of transmit power. The frequency reference subsystem will provide stable frequency and time signals to the other functions. The computer subsystem will process the received packets and make the data available to the other modules or directly to the subscriber via an RS-232 port. The computer will receive data to be packetized and uplinked from other modules or directly from the subscriber via an RS-232 port.

The key user terminal 212 technical parameters are summarized in Table A8. User terminals 212 are designed to be incapable of radiating in the 108-137 MHz bands.

The satellites have high velocities relative to a fixed terminal on the Earth's surface resulting in large Doppler shifts on the transmitted and received RF carriers. In the 148-149.9 MHz uplink band, the worst case Doppler shifts will be 2.2 KHz and in the 137-138 MHz downlink band they will be 2.0 KHz. The user terminals will track the user terminal-satellite downlink Doppler, scale the measured value by the uplink/downlink frequency ratio, and pre-compensate the user terminal-satellite uplink transmissions such that the signals are received at the satellite with no apparent Doppler shift. This will virtually eliminate frequency acquisition time at the satellite. Even an inexpensive user terminal frequency reference will reduce the apparent Doppler to less then 300 Hz. The maximum user terminal transmit power of about 5W in conjunction with the low, 1 % maximum, duty cycle will ensure that the user terminals will comply with all relevant radiation exposure safety standards.

**Table A8:**

| **Key User Terminal Parameters** | |
|---|---|
| Antenna | |
| Pattern | Non-Directional |
| Polarization | Vertical |
| | |

| Transmitter | |
|---|---|
| Frequency Band | 148-149.9 MHz |
| Channel Bandwidth | 15 KHz |
| Number of Active Channels | 1 |
| Doppler Pre-Compensation | ±2.2 KHz |
| Transmit Power | 5 W |
| Burst Duration | 450 msec |
| Burst Spacing | 15 seconds |
| Duty Cycle | 9 seconds every 15 minutes |
| 99% Power Bandwidth | 8.2 KHz |
| Modulation | OQPSK |
| Coder | Convolutional r = 7/8, K = 7 |
| Data Rate | 9.6 kbps to 300 kbps |
| | |

| Receiver | |
|---|---|
| Frequency Band | 137.175-137.825 MHz |
| Channel Bandwidth | 28.8 KHz |
| Number of Active Channels | 1 |
| Doppler Pull-In Range | ±2.0 KHz |
| Demodulation | OQPSK & FSK |
| Decoder | Soft Decision Viterbi r = 7/8, K = 7 |
| Data Rate | 24 kbps |
| Noise Figure | 4 dB |
| Implementation Loss | 2 dB |
| | |

| Frequency Reference | |
|---|---|
| Frequency Stability | 1.0 PPM over environment and time |

### User Terminal and Relay Station Antenna Gain Patterns

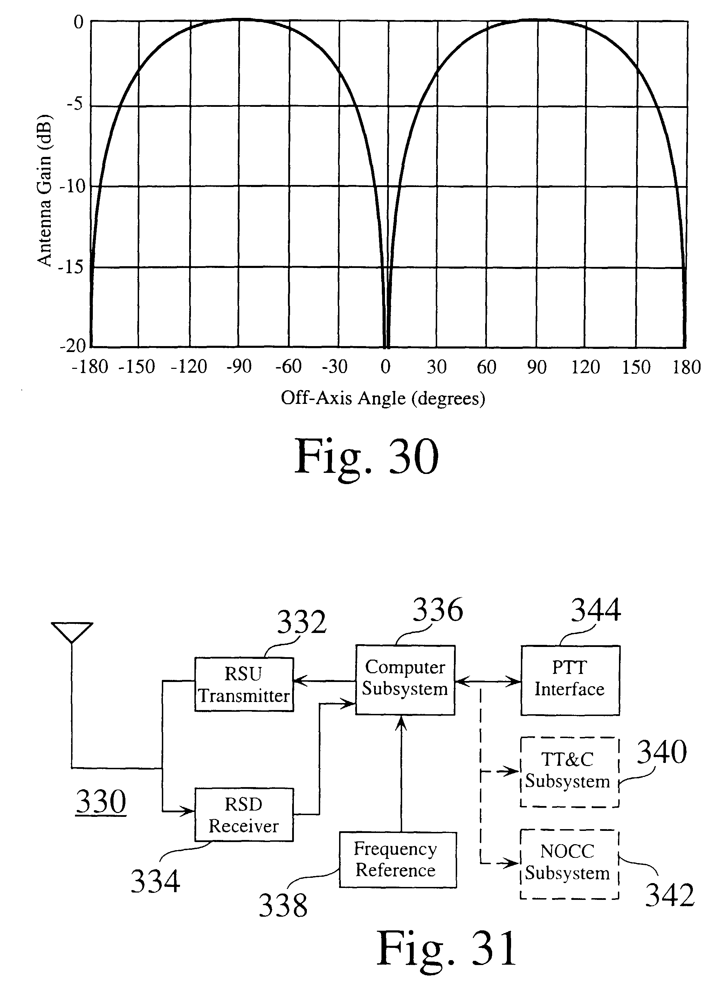

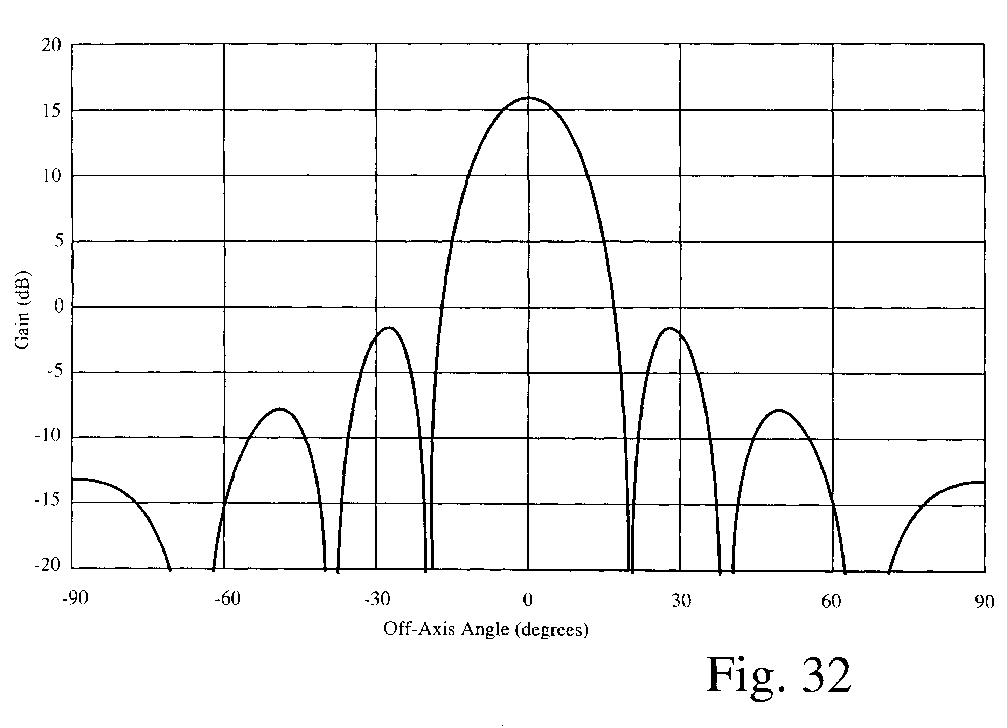

A typical user terminal 212 antenna gain pattern is shown in Figure 30. A typical relay station 34 antenna gain pattern is shown in Figure 32.

### Gateway Technical Parameters and Operation

A relay station 34 functional block diagram 330 is shown in Figure 31. The RSD receiver 334 will downconvert, demodulate, and decode the 50 kbps satellite downlink channel and provide the demodulated packets to the computer subsystem for subsequent processing. The RSU transmitter 332 will accept packetized data from the computer subsystem 336 at 50 kbps, encode and modulate the data, upconvert it to the transmit channel frequency, and provide 1.8 W of transmit power.

The frequency reference subsystem 338 will provide stable frequency and time signals for the other functions. The computer subsystem 336 will perform the packet and network overhead functions including packet routing and billing. It will control the open loop pointing of the gateway antenna to acquire and follow the satellites. In addition, it will process Doppler frequency measurements of the satellite signals to refine their orbital estimates.

The TT&C subsystem 340 will decode and process the telemetry data packets from the satellites 12 and generate and encode command packets for transmission to the satellites. All of the TT&C data will be encrypted to prevent unauthorized control of the satellites.

The NOCC subsystem 342 will allow for control of the constellation. The NOCC functions will include resolving overlap conflicts by commanding one of the overlapping satellites to cease operation during the overlap and monitoring constellation traffic levels.

The key gateway technical parameters are summarized in Table A9.

**Table A9:**

| **Key Relay Station Technical Parameters** | |
|---|---|
| Antenna | |
| Operating Frequency | 137-138 MHz & 148-149.9 MHz |
| Polarization | LHC |
| Gain | 16 dBi |
| Half Power Beamwidth | 22.5 degrees |
| | |

| Receiver | |
|---|---|
| Frequency Band | 137.175-137.825 MHz |
| Channel Bandwidth | 50 KHz |
| Number of Channels | 1 |
| Doppler Shift | 2.1 KHz |
| Demodulation | Differential OQPSK |
| Decoding | Soft Decision Viterbi, r = 7/8, K = 7 |
| Data Rate | 50 kbps |
| Noise Figure | 4 dB |
| Implementation Loss | 2 dB |
| | |

| Transmitter | |
|---|---|
| Frequency Band | 148-149.9 MHz |
| Channel Bandwidth | 50 KHz |
| Signal Bandwidth (99% power) | 71.3 KHz |
| Number of Channels | 1 |
| Transmit Power | 1.8 Watts |
| Modulation | Differential OQPSK and FSK |
| Coding | rate-7/8, constraint length 7 convolutional |
| Data Rate | 50 kbps |
| | |

| Frequency Reference | |
|---|---|
| Frequency Accuracy | 0.1 PPM over environment and time |

The relay stations 34 will poll the satellites 12 to initiate data transfer. The relay stations 34 will predict when each satellite will appear above the minimum elevation mask angle and use open loop pointing of the relay station 34 antenna to acquire and follow the satellite 12. The relay stations 34 RSD will estimate the satellite signal Doppler shift to minimize acquisition time. The relay stations 34 will use Doppler frequency measurements of the satellite signals to refine their orbital estimates.

The relay station-satellite uplink (RSU) and relay station-satellite downlink (RSD) signals are partitioned into 500 msec frames. Each frame will be divided into two time slots. The first time slot will be reserved for network control (Network packets). The remaining time slot will allow for the transfer of Text packets, Monitoring packets, or some combination. All packet exchanges will be acknowledged by the recipient using Network packets. The relay station 34 and the satellite will send at least one Network packet in the network control time slot until the relay station signs off.

### VI. Satellite & Orbital Configurations for Preferred & Alternative Embodiments

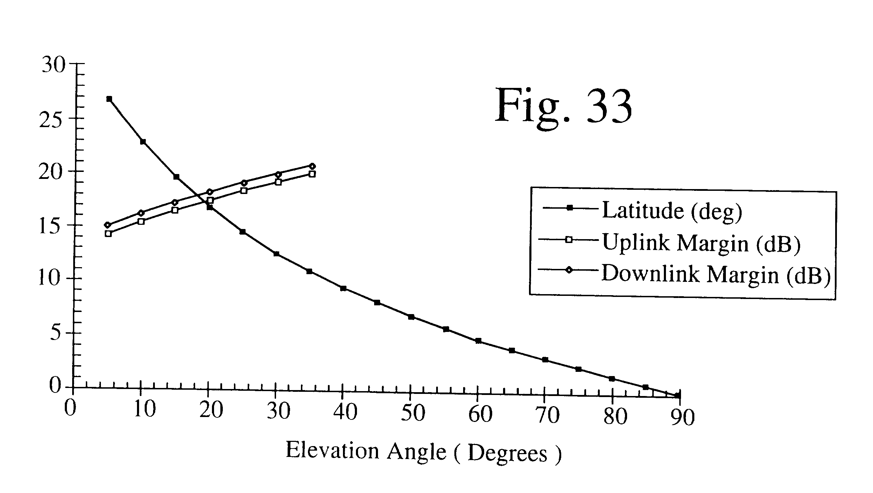

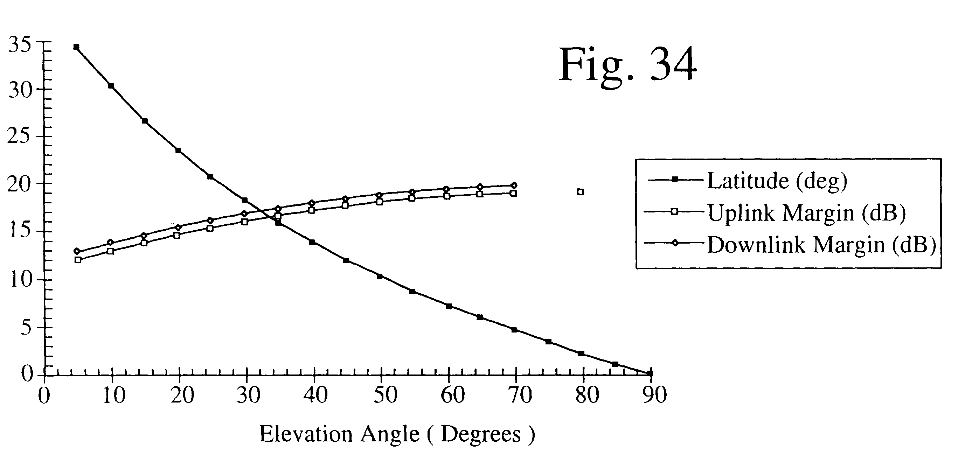

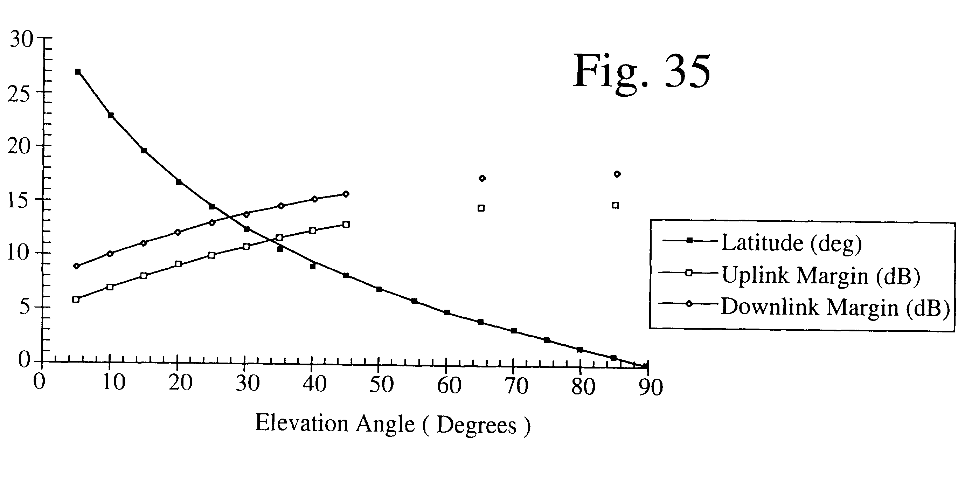

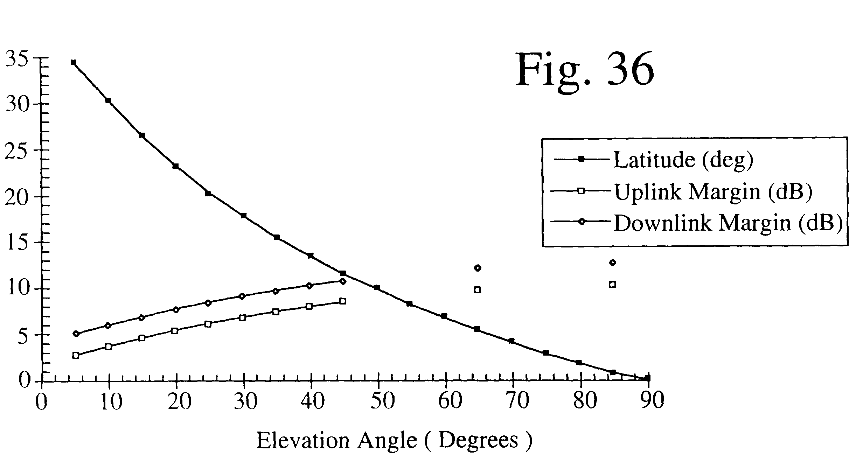

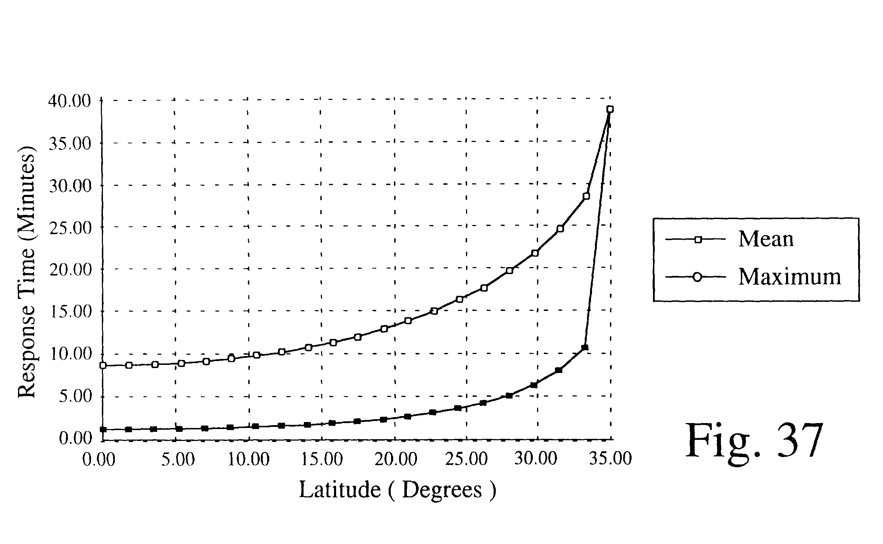

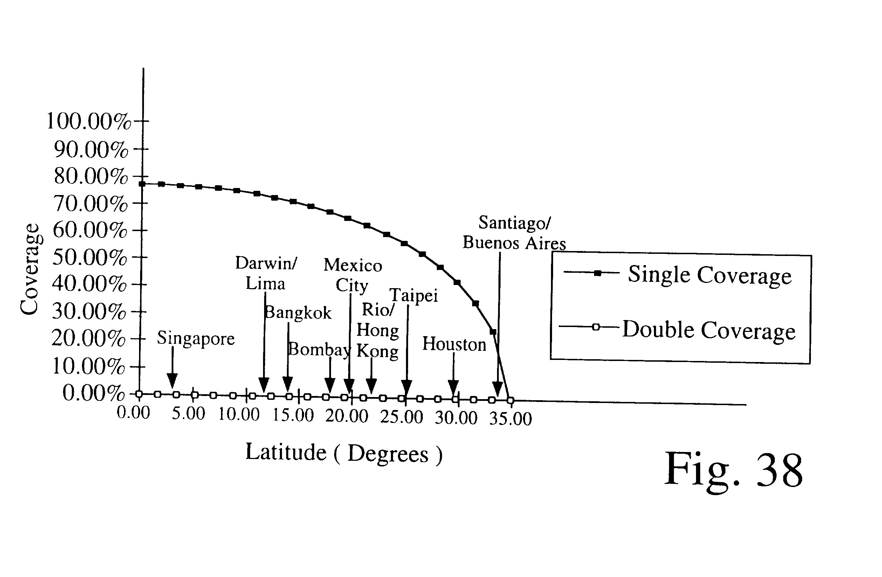

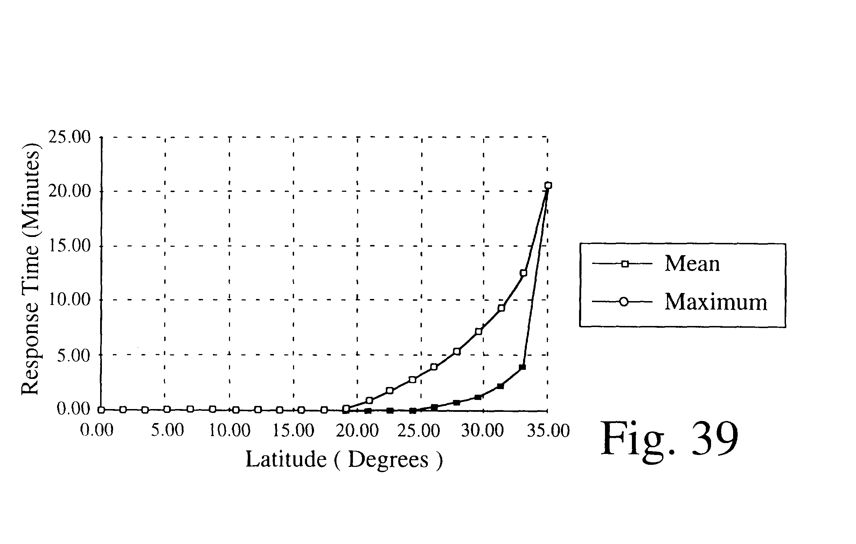

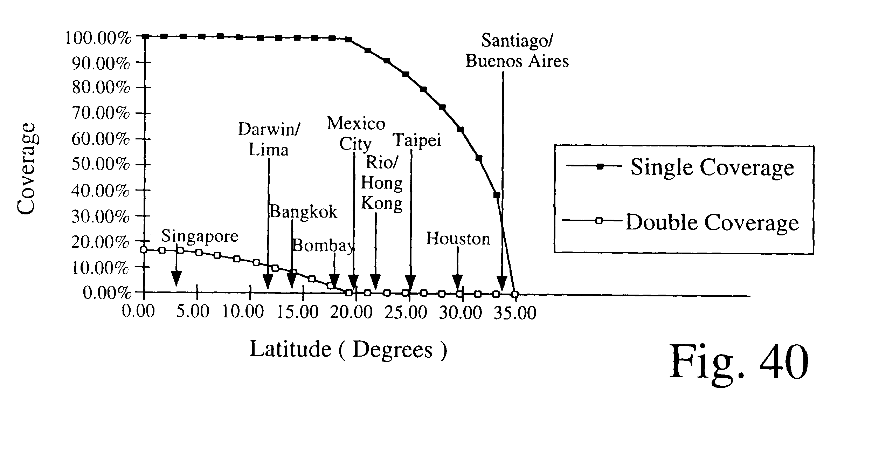

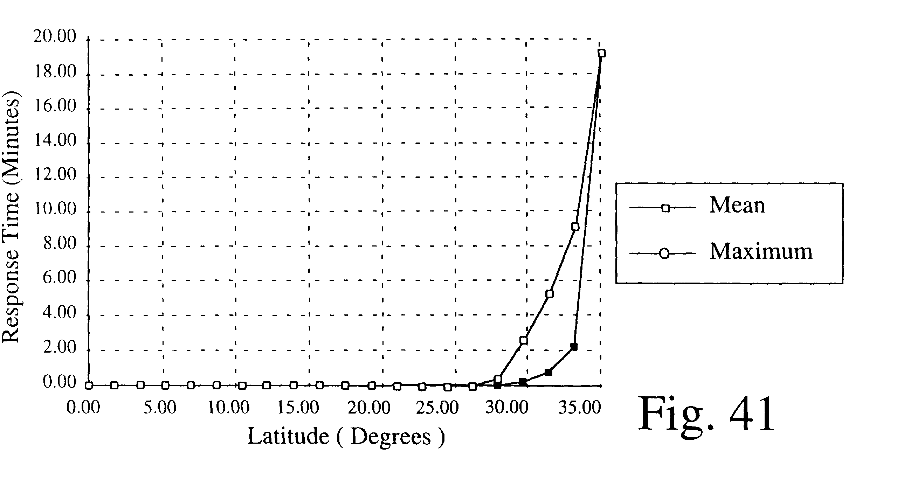

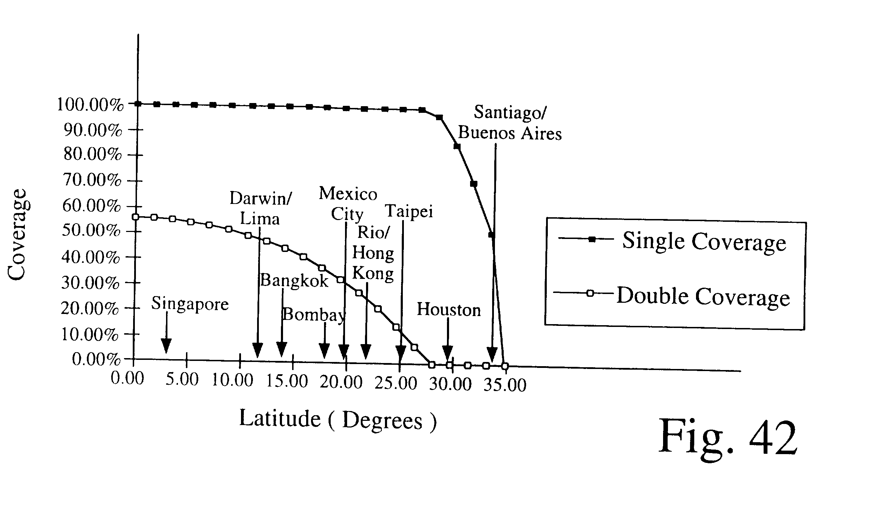

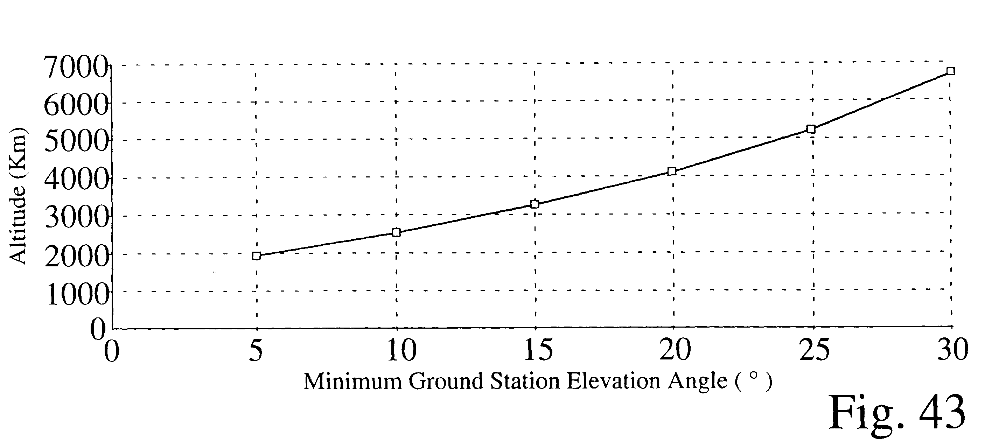

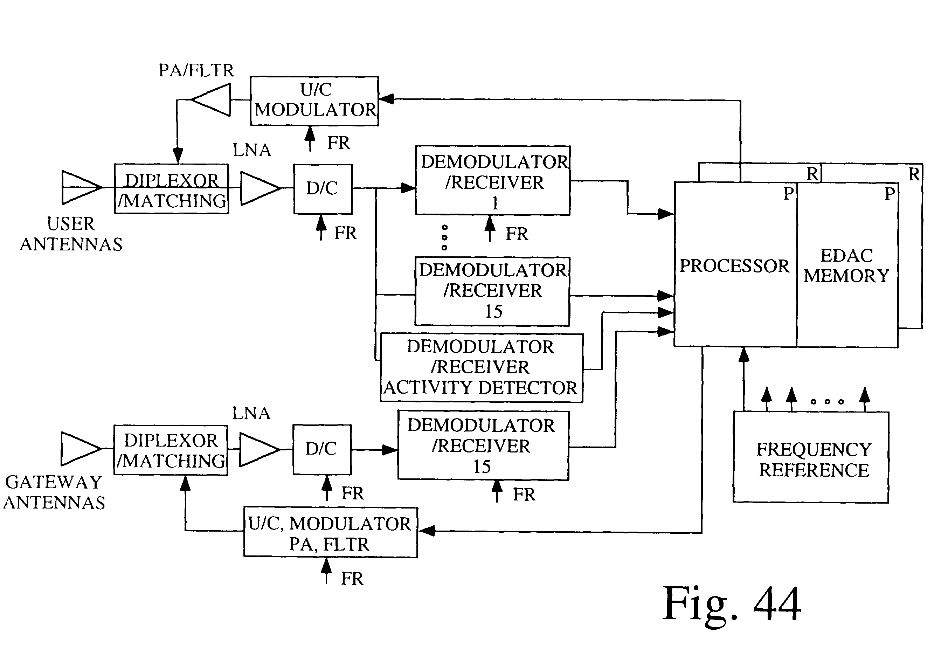

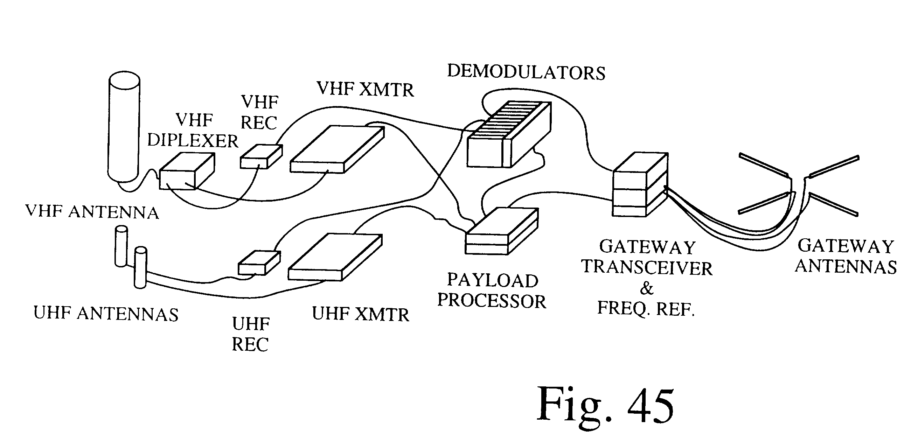

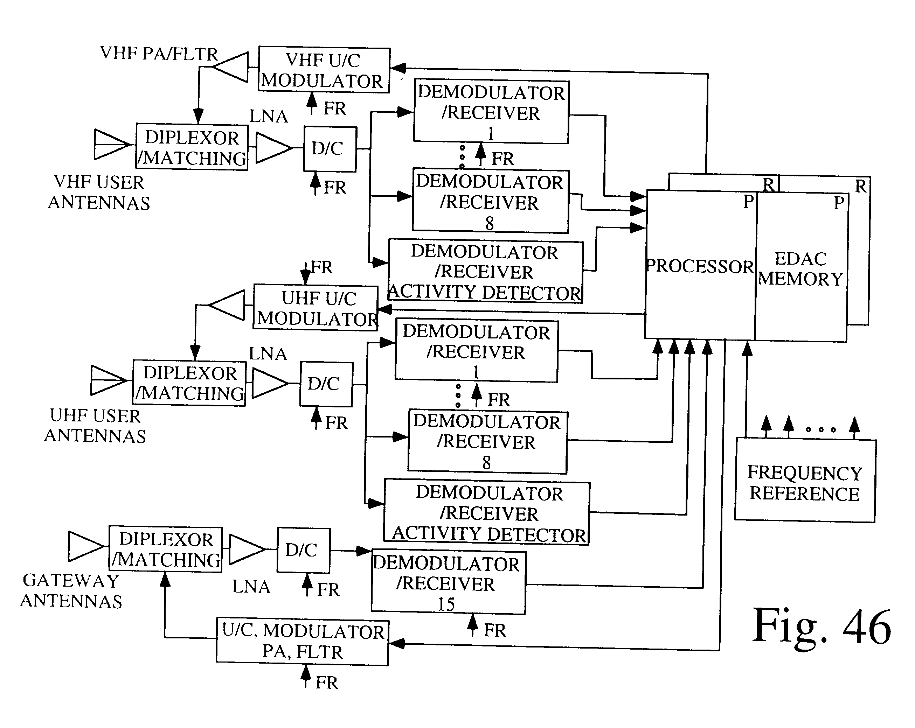

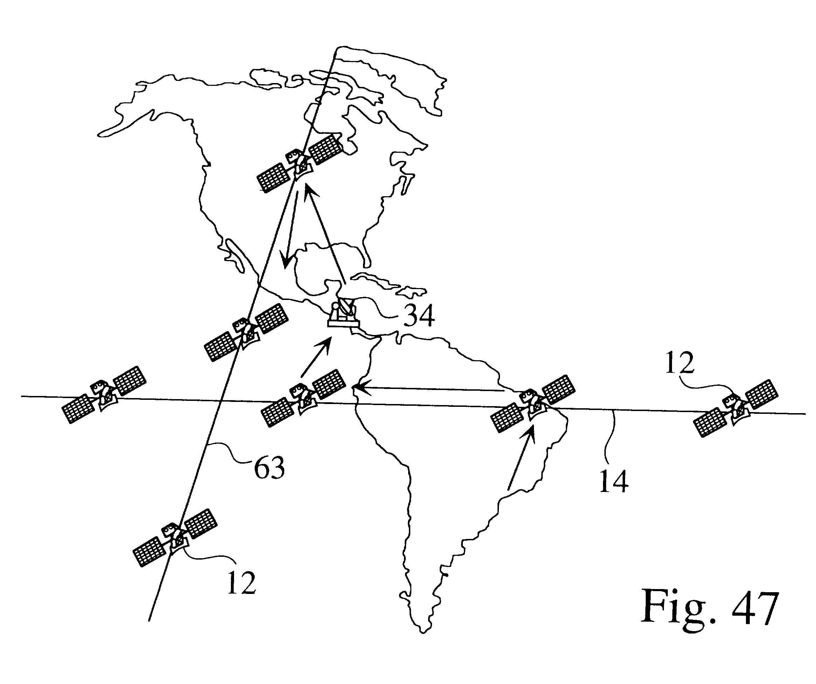

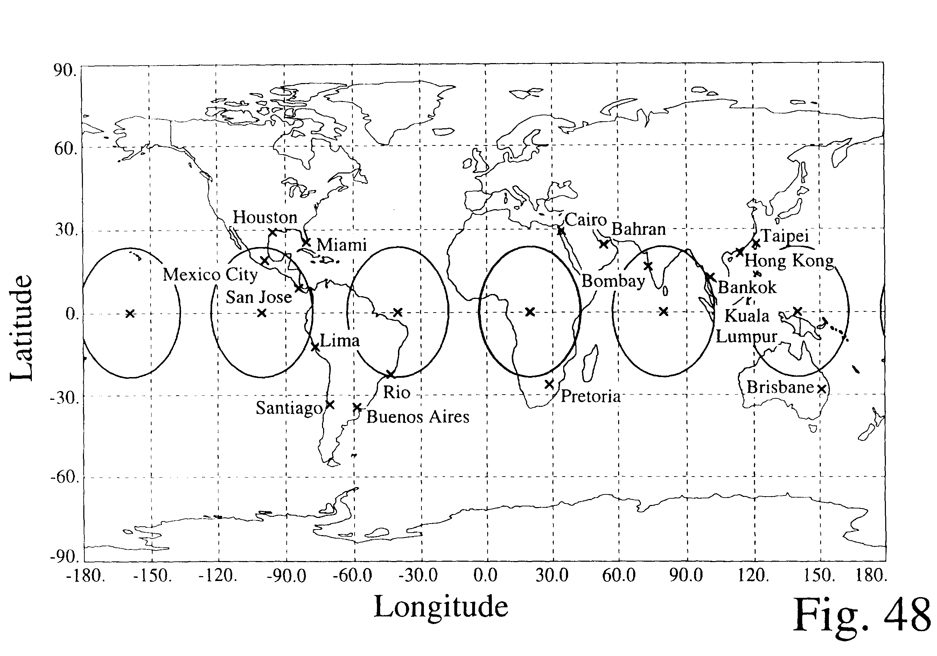

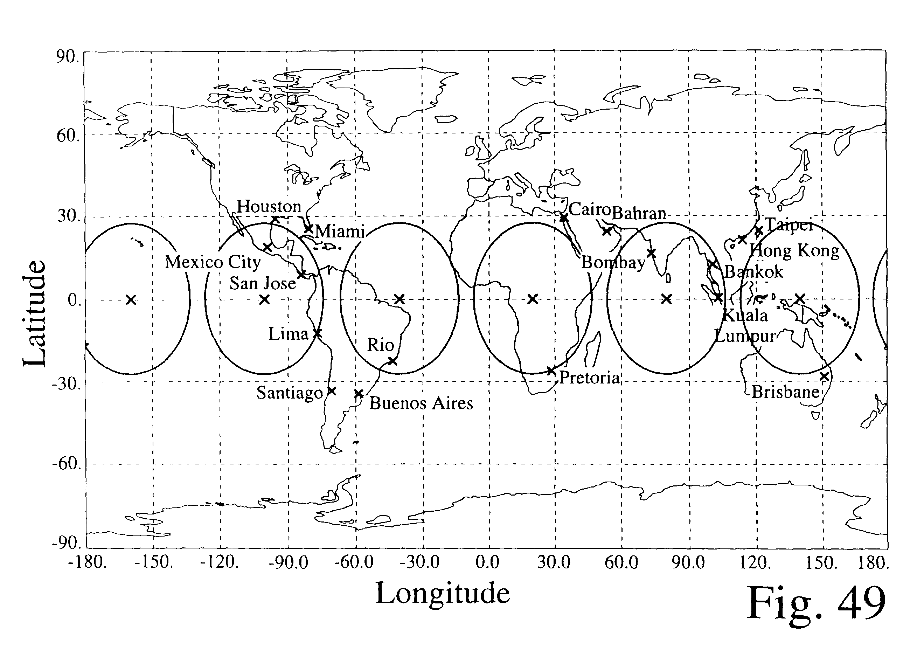

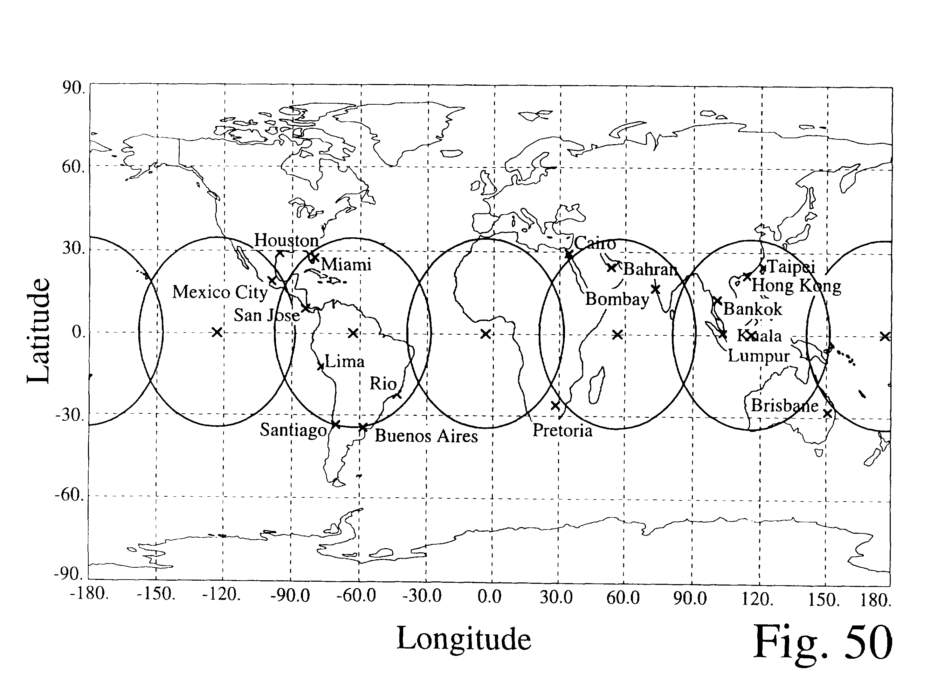

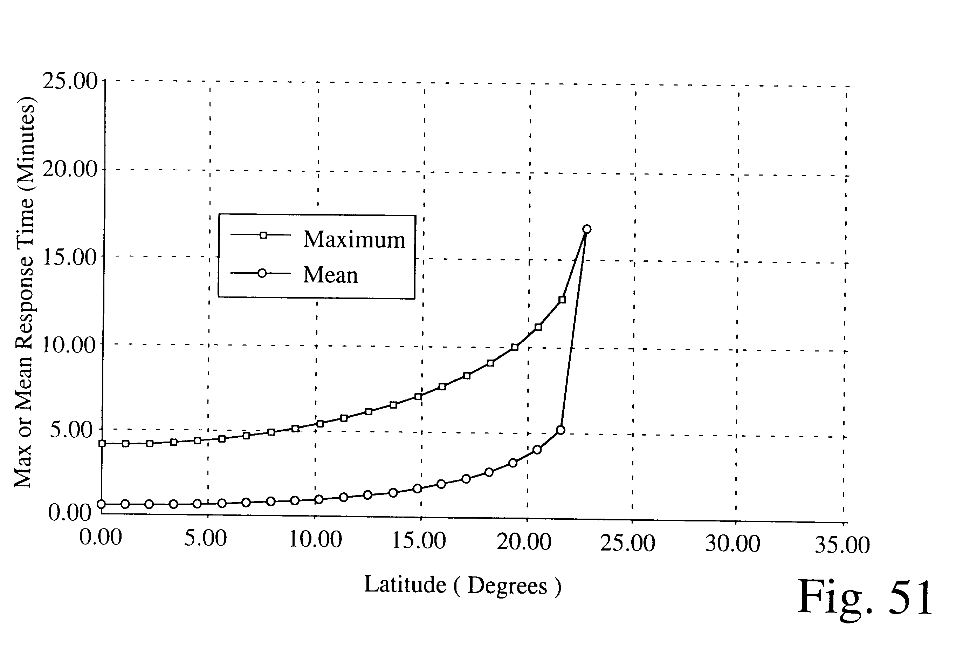

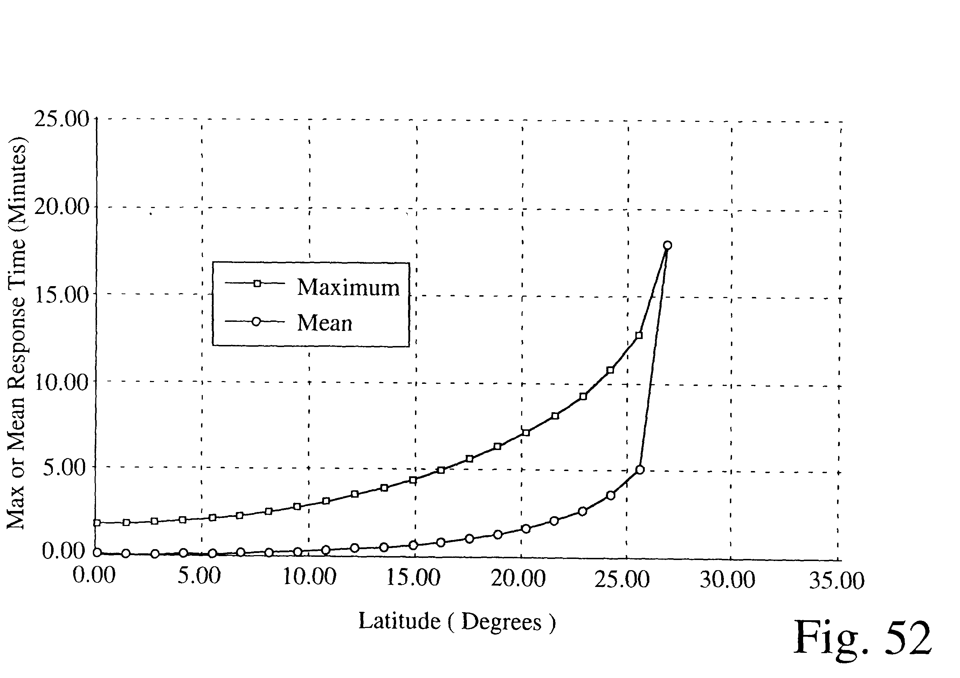

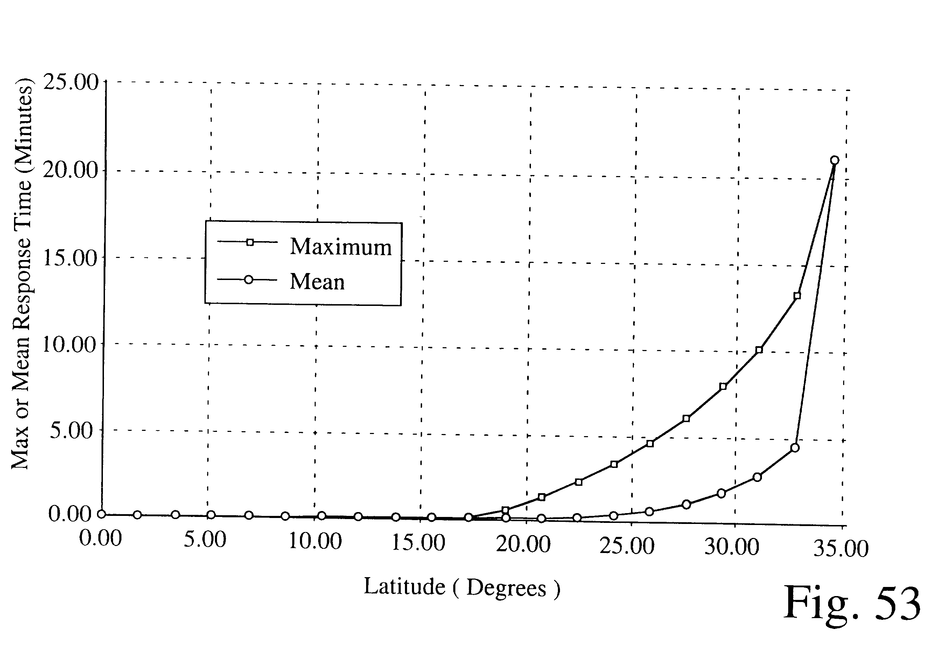

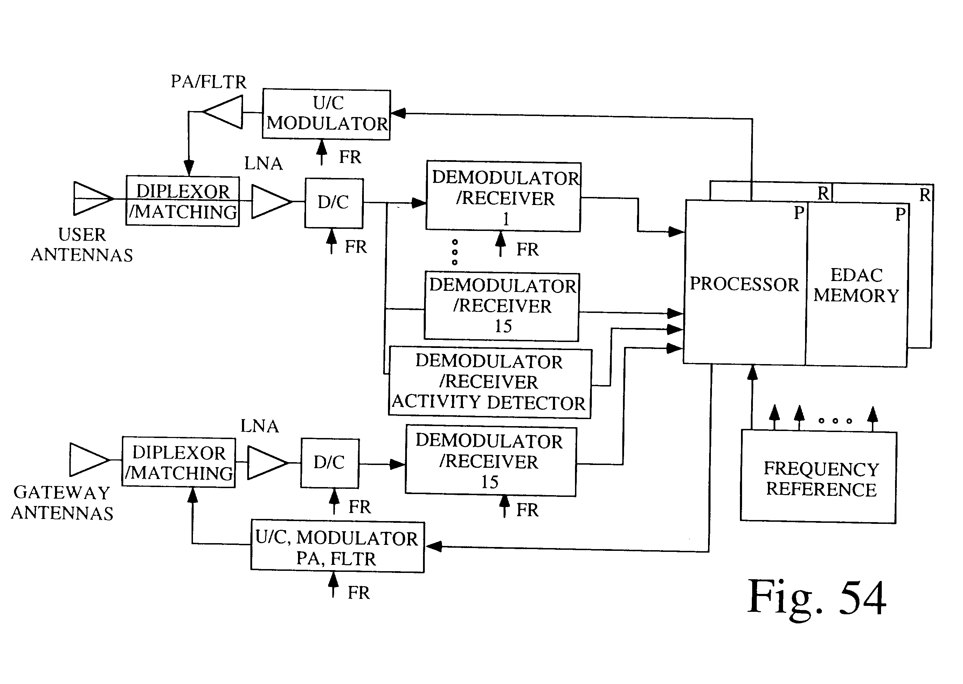

Figures 33 and 34 are graphs which reveal VHF antenna design trades for a 100W transmitter for altitudes of 1,100 km and 1,856 km, respectively. Figures 35 and 36 present graphs which reveal UHF antenna design trades for a 100W transmitter for altitudes of 1,100 km and 1,856 km, respectively. Figure 37 shows mean and maximum response times for four satellites at different altitudes and latitudes. Figure 38 exhibits the percent of time that a range of latitude is covered by four satellites moving in equatorial orbits. Figure 39 depicts mean and maximum response times for six satellites at various latitudes. Figure 40 shows the percent of time that a range of latitude is covered by six satellites moving in equatorial orbits. Figure 41 displays mean and maximum response times for eight satellites at various latitudes. Figure 42 portrays the percent of time that a range of latitude is covered by eight satellites moving in equatorial orbits. Figure 43 supplies a graph which illustrates the altitude inquired for thirty-five degree latitude coverage at a specified elevation angle. Figures 44, 45 and 46 provide schematic block diagrams of electronics that are utilized to implement one of the embodiments of the invention. Figure 44 shows the VHF only payload, Figure 45 shows dual VHF and UHF link sizing circuitry and Figure 46 shows a combined VHF and UHF payload diagram. Figure 47 shows how satellites transfer data from an equatorial to an inclined orbit via a crosslink through a relay station. Figures 48, 49 and 50 are diagrams showing satellite footprints for satellites orbiting at 800 km, 1,100 km and 1,852 km altitudes. Figures 51, 52 and 53 portray mean and maximum response times for satellites orbiting at 800 km, 1,100 km and 1.852 km altitudes. Figure 54 presents a payload block diagram.

### INDUSTRIAL APPLICABILITY

The System with Satellites on Equatorial and Inclined Orbits Relaying Information through Intersatellite Links and Earth Relays described above will provide new non-voice, non-geostationary mobile satellite service to millions of subscribers across the globe. The present invention will offer a wide range of vital services, including tracking and monitoring for the transportation industry; fixed site monitoring of industrial/utility locations; monitoring and tracking for misplaced or stolen assets; transmission of e-mail; two-way alphanumeric paging and emergency services.

### CONCLUSION

Although the present invention has been described in detail with reference to a particular preferred embodiment, persons possessing ordinary skill in the art to which this invention pertains will appreciate that various modifications and enhancements may be made without departing from the scope of the claims that follow. The various orbital parameters, satellites altitudes and populations and locations of the user terminals and relay stations that have been disclosed above are intended to educate the reader about preferred embodiments, and are not intended to constrain the limits of the invention or the scope of the claims. The *List of Reference Characters* which follows is intended to provide the reader with a convenient means of identifying elements of the invention in the specification and drawings. This list is not intended to delineate or narrow the scope of the claims.

### LIST OF REFERENCE CHARACTERS

*Figure 1*
   - 10: Illustration of one embodiment of invention using six satellites in equatorial orbit
   - 12: Satellite
   - 14: Equatorial orbit
   - 16: Equator
   - 18: 30 degrees North latitude
   - 20: 30 degrees South latitude
   - E: Earth
*Figure 2*
   - 22: Illustration of one embodiment of invention using fourteen satellites in equatorial orbit
*Figure 3*
   - 24: Satellite body
   - 25: Solar panels
   - 26: Helical antennas
   - 28: Inter-satellite link antennas
*Figures 4 & 5*
   - 30: Coverage areas on ground between 30 degrees North & 30 degrees South
   - 32: Coverage areas on ground between 30 degrees North & 30 degrees South
*Figure 6*
   - 34: Relay stations located on ground within 30 degrees of Equator
*Figures 7, 8 & 9*
   - 36: Illustration of footprints from 6 satellites in equatorial orbit at 1,852 km
   - 38: Footprint from one of 6 satellites at 1,852 km
   - 40: Latitude
   - 42: Longitude
   - 44: Illustration of footprints from 8 satellites in equatorial orbit at 1,852 km
   - 46: Footprint from one of 8 satellites at 1,852 km
   - 48: Illustration of footprints from 14 satellites in equatorial orbit at 1,852 km
   - 50: Footprint from one of 14 satellites at 1,852 km
*Figure 10*
   - 12: Diagram of satellites in equatorial orbit using ground stations to relay data
*Figure 11*
   - 54: Diagram of satellites in equatorial orbit using inter-satellite links to relay data
   - 55: Inter-satellite links
*Figure 12*
   - 56: Diagram of satellites in equatorial orbit using ground stations and inter-satellite links to relay data
*Figure 13*
   - 58: Diagram of satellites in equatorial and polar orbits with equatorial and polar relay stations
   - 60: Polar orbits
   - 61: Polar relay station
   - 65: Relay stations at middle latitudes
   - NP: North Pole
   - TR1: Transfer 1
   - TR2: Transfer 2
   - TR3: Transfer 3
   - TR4: Transfer 4
   - TR5: Transfer 5
   - TR6: Transfer 6
*Figure 14*
   - 62: Illustration of combined fleet of satellites in equatorial and 60 degree inclined orbits
   - 63: Orbits inclined at 60 degrees
*Figure 15*
   - 12: Satellite
   - 14: Equatorial orbit
   - 34: Relay stations within 30 degrees of Equator
   - 64: Illustration of combined fleet of satellites in equatorial orbit and 50° inclined orbits
   - 65: Relay stations at middle latitudes
   - 210: Fifty degree inclined orbit
*Figure 16*
   - 34: Relay stations
   - 68: Elevation angle
   - E: Earth
*Figure 18*
   - 12: Satellite
   - 16: Equator
   - 210: Fifty degree inclined orbit
   - E: Earth
   - NP: North pole
   - SP: South pole
*Figures 19, 20 & 21*
   - 12: Satellite
   - 34: Relay stations
   - 35a: Relay station uplink (RSU)
   - 35b: Relay station downlink (RSD)
   - 212: User terminal
   - 214: Terminal-to-satellite uplink (TSU)
   - 216: Terminal-to-satellite downlink (TSD)
   - 218: Geostationary communications satellite
   - 220: Public, switched telephone network (PSTN)
   - 222: Satellite very small aperture terminal (VSAT) links
   - 224: Equatorial relay stations
*Figure 22*
   - 225: Packet structure diagram
*Figure 23*
   - 230: RF communications subsystem
   - 240: Tracking, telemetry & control computer
   - 250: Attitude determination and control subsystem
   - 260: Electric power subsystem
   - 270: Thermal control subsystem
*Figure 24*
   - 280: Communications payload block diagram
*Figure 28*
   - 300: Modem module
   - 302: Expanded memory
   - 304: Parallel interface
   - 306: AC adapter
   - 308: Palmtop personal computer
   - 310: Global positioning system
   - 312: Battery pack
   - 314: Whip antenna
*Figure 29*
   - 300: Modem module
   - 314: Antenna
   - 320: Terminal-to-satellite downlink (TSD) receiver
   - 322: Terminal-to-satellite uplink (TSU) transmitter
   - 324: Computer subsystem
   - 326: Frequency reference
*Figure 31*
   - 330: Relay station functional block diagram
   - 332: Relay station-to-satellite uplink (RSU) transmitter
   - 334: Relay station-to-satellite downlink (RSD) receiver
   - 336: Computer subsystem
   - 338: Frequency reference
   - 340: Tracking, telemetry and control subsystem
   - 342: Network operation and control center subsystem
   - 344: PTT interface

## Claims

1. A satellite communications system comprising:
a plurality of equatorial, polar and middle latitude relay stations (34, 61, 65); said relay stations (34, 61, 65) being located circumferentially along Earth's Equator (16), near Earth's poles (NP, SP) and in regions of Earth's middle-latitudes, respectively;
a first satellite (12) operating in an equatorial, low Earth orbit (14);
a second satellite (12) operating in a polar or inclined, low Earth orbit (60, 63, 210);
said first satellite (12) being capable of communicating with said plurality of equatorial relay stations (34) over uplinks (35a) and downlinks (35b);
said second satellite (12) being capable of communicating with at least one of said plurality of polar relay stations (61) with at least one of said plurality of middle-latitude relay stations (65) and with at least one of said plurality of equatorial relay stations (34);
said first satellite (12) being capable of storing a message from a first equatorial relay station (34) and forwarding said message to a second equatorial relav station (34); and
said second satellite (12) being capable of receiving said message from said second equatorial relay station (34) and forwarding said message to one of said plurality of polar and middle-latitude relay stations (61, 65).

2. The satellite communications system as claimed in Claim 1, further including a plurality of satellites (12) operating in said equatorial and inclined orbits (14, 60, 63, 210); said plurality of satellites (12) operating in said equatorial orbit (14) being capable of communicating over inter-satellite links (55).

3. The satellite communications system as claimed in Claim 1, in which any combination of said uplinks (35a), said downlinks (35b) and inter-satellite links (55) may be employed to accelerate delivery of said message throughout a particular orbital plane (14,60,63,210).

4. The satellite communications system as claimed in Claim 2, in which said plurality of satellites (12) includes at least six satellites (12), equally spaced in said equatorial orbit (14).

5. The satellite communications system as claimed in Claim 2, in which said plurality of satellites (12) includes a maximum of fourteen satellites (12), equally spaced in said equatorial orbit (14).

6. The satellite communications system as claimed in Claim 2, in which each said plurality of satellites (12) is capable of communicating over a generally circular area (44), between a latitude on the Earth (E) of thirty degrees North (18) and a latitude on the Earth (E) of thirty degrees South (20).

7. A satellite communications system according to Claim 1, and further comprising a plurality of user terminals (212) distributed over the Earth (E);
each of said plurality of satellites (12) being capable of communicating with one of said plurality of user terminals (212);
at least one of said plurality of relay stations (34) being capable of functioning as a network operation and control centre (NOCC); and
said relay stations (34) being capable of communicating with each other by means alternative to the previously-mentioned modes of communication.

8. The satellite communications system as claimed in Claim 7, in which said plurality of low Earth orbits (14, 60, 63, 210) includes four orbital planes (210), each of said orbital planes (210) being inclined at fifty degrees.

9. The satellite communications system as claimed in Claim 7, in which said plurality of low Earth orbits (14, 60, 63, 210) includes five orbital planes, four of said orbital planes being inclined at fifty degrees and one of said orbital planes being inclined at zero degrees.

10. The satellite communications system as claimed in Claim 7, in which said plurality of low Earth orbits (14, 60, 63, 210) includes three orbital planes, two of said orbital planes being inclined at sixty degrees and one of said orbital planes being inclined at zero degrees.

11. The satellite communications system as claimed in Claim 7, in which said plurality of satellites (12), operating in said plurality of equatorial (14) orbits, are capable of communicating over inter-satellite links (55).

12. The satellite communications system as claimed in Claim 7, in which each one of said plurality of user terminals (212) includes a modem (300) capable of interconnecting a computer system RS232 port to a satellite (12).

13. The satellite communications system as claimed in Claim 7, in which said alternative communication means by which said relay stations (34) are capable of communicating with each other, comprises:
a very small aperture terminal (VSAT) link (222) through a geostationary satellite (218); or
a public switched telephone network (PSTN) (220).

14. The satellite communications system claimed in Claim 7 which further includes:
said plurality of satellites (12) having dynamic, adaptive channel assignment means for monitoring a pool of radio frequencies in a 148.0 to 149.9 MHz band and assigning channels to said plurality of user terminals (212) as available; said dynamic, adaptive channel assignment means capable of scanning said pool of radio frequencies in a half-second interval for signals indicating channel usage, projecting channel usage for an ensuing half-second and thereafter instructing a calling user terminal (212) which channel to use.

15. The satellite communications system as claimed in Claim 7 in which:
said plurality of satellites (12), said plurality of user terminals (212) and said plurality of relay stations (34, 61, 65) are capable of transmitting and receiving a plurality of packets (225) of data and system overhead information;
said plurality of satellites (12) are also capable of transmitting a downlink signal (35b, 216) having a spectrum divided into four segments, each one of said segments being used in one of said four orbital planes;
said downlink signal (35b, 216) includes a plurality of frames of 500 millisecond duration;
said downlink signal (35b, 216) has a frequency shift keying (FSK) modulation and a quadraphase shift keying (QPSK) modulation of said packet transmissions in each of said plurality of frames in a time-shared manner;
said plurality of satellites (12) are also capable of receiving an uplink signal (35a, 214) in which said quadraphase shift keying (QPSK) modulation is used for transmitting said plurality of packets (225);
said plurality of satellites (12) are also capable of receiving a user terminal-satellite uplink signal (214) and transmitting a user terminal-satellite downlink signal (216) having a variable data rate, said data rate variable from a low rate to provide for reduced burst power demand and reduced cost of equipment for said user terminals (212), to a high rate for rapid transmission of data;
said user terminal-satellite uplink signal (214) uses a combination of random access and frequency division multiplexing (FDM); and
said downlink signal (35b, 216) and said relay station-satellite uplink signal (35a) uses a time division multiplexing;
said plurality of satellites (12) and said user terminals (212) are also capable of employing an auction protocol in a first burst of data in which said satellite (12) announces a level of message traffic being currently accepted for storage and forwarding, said level of message traffic being variable from a most expensive, fastest forwarding traffic to a least expense, slowest forwarding traffic.

16. The satellite communications system as claimed in Claim 8 in which said plurality of satellites (12) includes twenty-four satellites (12), six of said satellites (12) orbiting in each of said four orbital planes.

17. The satellite communications system as claimed in Claim 9 in which said plurality of satellites includes thirty satellites, six satellites (12) orbiting in each of said five orbital planes.

18. The satellite communications system claimed in Claim 11 in which said plurality of satellites (12), operating in said plurality of equatorial orbits (14), are capable of using a combination of said ground relay stations (34) and said inter-satellite links (55) to relay data to a point of delivery.

19. The satellite communications system claimed in Claim 12 in which said modem (300) is a module capable of interconnection, by itself or in combination, with an antenna (314), a personal computer (308), a parallel interface (304), an expanded memory (302), and a global positioning system (310).

20. The satellite communications system claimed in Claim 12 in which said modem (300) includes an uplink transmitter (322) and a downlink receiver (320) capable of communicating with said plurality of satellites (12) a plurality of packets (225) of data and system overhead information.

21. The satellite communications system claimed in Claim 12 in which
said modem (300) is capable of pre-compensating each of said plurality of user terminals (212) for Doppler shift of said downlink signal (216) from said plurality of satellites (12) minimizing frequency acquisition time by each of said plurality of satellites (12);
said modem (300) being capable of tracking a Doppler effect of said downlink signal (216) and scaling the measured value of said Doppler effect by a ratio of said uplink signal (214) frequency to said downlink signal (216) frequency, and adjusting the user terminal-satellite uplink signal (214) such that said uplink signal (214) is received at said satellite (12) corrected for said Doppler shift.

22. The satellite communications system claimed in Claim 14 in which said dynamic, adaptive channel assignment means includes a computer subsystem (324) having an algorithm for said projecting channel usage, said algorithm based on a sample history of scanning for said half-second intervals.

23. The satellite communications system as claimed in Claim 15 in which said variable data rate for a user terminal-satellite uplink signal (214) ranges from 9.6 kbps to 300 bps, and said variable data rate for a relay station-satellite downlink signal (35b) ranges from 24 kbps for QPSK modulation to 6 kbps for FSK modulation.

24. A method of satellite communications comprising the steps of:
providing a plurality of equatorial, middle-latitude and polar relay stations (34, 61);
said relay stations being located circumferentially along Earth's equator (16), in regions of Earth's middle-latitudes and near Earth's poles, respectively;
operating a first satellite (12) in an equatorial, low Earth orbit (14);
operating a second satellite (12) in a polar or inclined, low Earth orbit (60,63,210);
communicating between said first satellite (12) and one of said plurality of equatorial relay stations (34) over uplinks (35a) and downlinks (35b), and with one of said plurality of satellites in equatorial orbit (14) over inter-satellite links (55);
communicating between said second satellite (12) and at least one of said plurality of equatorial relay stations (34), middle-latitude relay stations (34) and polar relay stations (61);
storing a message from a first equatorial relay station (34) in said first satellite (12) and forwarding said message to a second equatorial relay station (34);
receiving said message from said second equatorial relay station (34) with said second satellite (12) and forwarding said message to at least one of said plurality of middle-latitude relay stations (34) and polar relay stations (61).

25. A method of satellite communications according to Claim 24, further comprising the steps of providing a plurality of user terminals (212) distributed over the Earth (E); communicating between each of said plurality of satellites (12) and said plurality of user terminals (212); and communicating, one with another, between said relay stations (34) by means alternative to the previously-mentioned modes of communication.

26. The method of satellite communications as claimed in Claim 25 in which communicating between said first satellite (12) and one of said plurality of equatorial relay stations (34) over uplinks (35a) and downlinks (35b), and with one of said plurality of satellites in equatorial orbit (14) over inter-satellite links (55), further includes the step of employing any combination of said uplinks (35a), said downlinks (35b) and said inter-satellite links (55) to accelerate delivery of said message throughout a particular orbital plane (14,60,63,210).

27. The method of satellite communications as claimed in Claim 25 in which communicating between each of said plurality of satellites (12) and at least one of said plurality of relay stations (34,61,65) and said plurality of user terminals (212) further includes the steps of:
transmitting and receiving a plurality of packets (225) of data and system overhead information between said plurality of satellites (12), said plurality of user terminals (212) and between said plurality of satellites (12) and said plurality of relay stations (34,61,65);
transmitting a relay station-satellite downlink signal (35b) and a user terminal-satellite downlink signal (216) from said plurality of satellites (12), each said downlink signal (35b,216) having a spectrum divided into four segments, each one of said segments being used in one of said four orbital planes, said downlink signal (35b,216) including a plurality of frames of 500 millisecond duration;
modulating said downlink signal (35b,216) using a frequency shift keying (FSK) modulation and a quadraphase shift keying (QPSK) modulation of said packet transmissions in each of said plurality of frames in a time-shared manner;
receiving with said plurality of satellites (12) a relay station uplink signal (35a) in which said quadraphase shift keying (QPSK) modulation is used for transmitting said plurality of packets (225);
receiving a user terminal-satellite uplink signal (214) with said plurality of satellites (12) and transmitting a user terminal-satellite downlink signal (216) having a variable data rate, said data rate variable from a low rate to provide for reduced burst power demand and reduced cost of equipment for said user terminals (212), to a high rate for rapid transmission of data;
multiplexing said user terminal-satellite uplink signal (214) using a combination of random access and frequency division (FDM) multiplexing;
multiplexing said downlink signal (35b,216) and said relay station-satellite uplink signal (35a) using a time division multiplexing (TDM); and
employing an auction protocol in a first burst of data in which said satellite (12) announces to said user terminals (212) a level of message traffic being currently accepted for storage and forwarding, said level of message traffic being variable from a most expensive, fastest forwarding traffic to a least expense, slowest forwarding traffic.

28. A satellite communications system according to Claim 1 and further comprising a plurality of user terminals (212) distributed over the Earth (E);
each of said plurality of satellites (12) being capable of communicating with one of said plurality of user terminals (212);
and at least one of said plurality of relay stations (34) being capable of functioning as a network operation and control centre (NOCC).

29. A method of satellite communications according to Claim 24, further comprising the steps of providing a plurality of user terminals (212) distributed over the Earth (E);
and communicating between each of said plurality of satellites (12) and said plurality of user terminals (212).

30. A satellite communications system comprising:
a plurality of Earth relay stations (34,61,65) including at least a plurality of equatorial relay stations (34);
a first satellite (12) operating in an equatorial, low Earth orbit (14);
a second satellite (12) operating in an equatorial, polar or inclined, low Earth orbit (14,60,63,210);
said first satellite (12) being capable of communicating with said plurality of equatorial relay stations (34) over uplinks (35a) and downlinks (35b);
said second satellite (12) being capable of communicating with at least one of said plurality of Earth relay stations (34, 61, 65);
said first satellite (12) being capable of storing a message from a first equatorial relay station (34) and forwarding said message to a second equatorial relay station (34); and
said second satellite (12) being capable of receiving said message from said second equatorial relay station (34) and forwarding said message to one of said plurality of Earth relay stations (34, 61, 65).

## Patentansprüche

1. Satellitenkommunikationssystem, das folgendes aufweist:
eine Vielzahl von Relaisstationen von äquatorialer, polarer und mittlerer geographischer Breite (34, 61, 65), welche Relaisstationen jeweils umfänglich längs des Erdäquators (16), in der Nähe der Erdpole (NP, SP) und in Regionen mittlerer Breite der Erde angeordnet sind;
einen ersten Satelliten (12), der in einer äquitorialen unteren Erdumlaufbahn (14) arbeitet;
einen zweiten Satelliten (12), der in einer polaren oder geneigten, unteren Erdumlaufbahn (60, 63, 210) arbeitet;
wobei der erste Satellit (12) mit der Vielzahl der äquatorialen Relaisstationen (34) über Aufwärtsverbindungen (35a) und Abwärtsverbindungen (35b) kommunizieren kann;
wobei der zweite Satellit (12) mit wenigstens einer der Vielzahl der polaren Relaisstationen (61), mit wenigstens einer aus der Vielzahl der Relaisstationen mittlerer Breite (65) und mit wenigstens einer der Vielzahl der äquatorialen Relaisstationen (34) kommunizieren kann;
wobei der erste Satellit (12) in der Lage ist, eine Nachricht von einer ersten äquatorialen Relaisstation (34) zu speichern und diese Nachricht zu einer zweiten äquatorialen Relaisstation (34) weiterzuleiten; und
wobei der zweite Satellit (12) in der Lage ist, diese Nachricht von einer zweiten äquatorialen Relaisstation (34) zu empfangen und diese Nachricht zu einer der Vielzahl von polaren Relaisstationen und Relaisstationen mittlerer Breite (61, 65) weiterzuleiten.

2. Satellitenkommunikationssystem nach Anspruch 1, das außerdem eine Vielzahl von Satelliten (12) aufweist, die in den äquatorialen und geneigten Umlaufbahnen (14, 60, 63, 210) arbeiten; wobei die Vielzahl der in den äquatorialen Umlaufbahnen (14) arbeitenden Satelliten (12) in der Lage ist, über Intersatellitenverbindungen (55) zu kommunizieren.

3. Satellitenkommunikationssystem nach Anspruch 1, bei dem irgendeine Kombination der Aufwärtsverbindungen (35a), der Abwärtsverbindungen (35b) und der Intersatellitenverbindungen (55) verwendet werden kann, um eine Zusendung der Nachricht über eine bestimmte Orbitalebene (14, 60, 63, 210) zu beschleunigen.

4. Satellitenkommunikationssystem nach Anspruch 2, bei dem die Vielzahl der Satelliten (12) mindestens sechs Satelliten (12) aufweist, die auf der äquatorialen Umlaufbahn (14) gleich beabstandet sind.

5. Satellitenkommunikationssystem nach Anspruch 2, bei dem die Vielzahl der Satelliten (12) maximal vierzehn Satelliten (12) aufweist, die auf der äquatorialen Umlaufbahn (14) gleich beabstandet sind.

6. Satellitenkommunikationssystem nach Anspruch 2, bei dem jeder von der Vielzahl der Satelliten (12) in der Lage ist, über einen allgemeinen zirkulären Bereich (44) zwischen dreißig Grad nördlicher Breite (18) und dreißig Grad südlichen Breite (20) zu kommunizieren.

7. Satellitenkommunikationssystem nach Anspruch 1, das außerdem eine Vielzahl von über die Erde (E) verteilten Benutzerstationen (212) aufweist;
wobei jeder von der Vielzahl der Satelliten (12) mit einer der Vielzahl der Benutzerstationen (212) kommunizieren kann;
wenigstens eine von der Vielzahl der Relaisstationen (34) in der Lage ist, als ein Netzwerkbetriebs- und Steuerzentrum (NOCC = network operation and control centre) zu arbeiten; und
die Relaisstationen (34) in der Lage sind, miteinander über zu den im vorhergehenden erwähnten Kommunikationsmodi alternativen Mitteln zu kommunizieren.

8. Satellitenkommunikationssystem nach Anspruch 7, bei dem die Vielzahl der unteren Erdumlaufbahnen (14, 60, 63, 210) vier Orbitalebenen (210) aufweist, wobei jede der Orbitalebenen (210) um fünfzig Grad geneigt ist.

9. Satellitenkommunikationssystem nach Anspruch 7, bei dem die Vielzahl der unteren Erdumlaufbahnen (14, 60, 63, 210) fünf Orbitalebenen aufweist, wobei vier der Orbitalebenen um fünfzig Grad geneigt sind und eine der Orbitalebenen um Null Grad geneigt ist.

10. Satellitenkommunikationssystem nach Anspruch 7, bei dem die Vielzahl der unteren Erdumlaufbahnen (14, 60, 63, 210) drei Orbitalebenen aufweist, wobei zwei der Orbitalebenen um sechzig Grad geneigt sind und eine der Orbitalebenen um Null Grad geneigt ist.

11. Satellitenkommunikationssystem nach Anspruch 7, bei dem die Vielzahl der Satelliten (12), die auf der Vielzahl der äquatorialen (14) Umlaufbahnen arbeiten, über Intersatellitenverbindungen (55) kommunizieren können.

12. Satellitenkommunikationssystem nach Anspruch 7, bei dem eine jede von der Vielzahl der Benutzerstationen (212) ein Modem (300) aufweist, das eine RS232-Schnittstelle eines Computersystems mit einem Satelliten (12) verbinden kann.

13. Satellitenkommunikationssystem nach Anspruch 7, bei dem die alternativen Kommunikationsmittel, über die die Relaisstationen (34) miteinander kommunizieren können, folgendes aufweisen:
eine Terminalverbindung mit einer sehr kleinen Apertur (VSAT = very small aperture terminal) (222) über einen geostationären Satelliten (218); oder
ein öffentlich geschaltetes Telefonnetz (PSTN = public switched telephone network) (220).

14. Satellitenkommunikationssystem nach Anspruch 7, das außerdem folgendes aufweist:
die Vielzahl von Satelliten (12) mit dynamischen, adaptiven Kanalzuordnungsmitteln zur Überwachung eines Pools von Radiofrequenzen in einem Frequenzband von 148,0 bis 149,9 MHz und zur Zuweisung der Kanäle an die Vielzahl der verfügbaren Benutzerstationen (212); wobei die dynamischen, adaptiven Kanalzuordnungsmittel, die den Pool der Radiofrequenzen in einem Halbsekunden-lntervall nach Signalen abtasten können, die Kanalbenutzung anzeigen, die eine Kanalbenutzung für eine folgende halbe Sekunde projektieren und danach eine anrufende Benutzerstation (212) informieren, welcher Kanal zu benutzen ist.

15. Satellitenkommunikationssystem nach Anspruch 7, bei dem
die Vielzahl der Satelliten (12), die Vielzahl der Benutzerstationen (212) und die Vielzahl der Relaisstationen (34, 61, 65) in der Lage sind, eine Vielzahl von Datenpaketen (225) und Systemverwaltungsinformation zu übertragen und zu empfangen;
die Vielzahl der Satelliten (12) ebenfalls in der Lage ist, ein Abwärtsverbindungssignal (35b, 216) mit einem in vier Segmente geteilten Spektrum zu übertragen, wobei jedes einzelne der Segmente in einer der vier Orbitalebenen verwendet wird;
das Abwärtsverbindungssignal (35b, 216) eine Vielzahl von Datenübertragungsblöcken von einer Dauer von 500 Millisekunden aufweist;
das Abwärtsverbindungssignal (35b, 216) eine Frequenzumtastungs (FSK = frequency shift keying)-Modulation und eine Vierphasen-Umtastmodulation (QPSK = quadraphase shift keying) der Datenpaketübertragungen in jedem der Vielzahl der Datenübertragungsblöcke in einer zeitlich verzahnten Weise aufweist;
die Vielzahl der Satelliten (12) ebenfalls in der Lage ist, ein Aufwärtsverbindungssignal (35a, 214) zu empfangen, wobei die VierphasenUmtastmodulation (QPSK = quadraphase shift keying) zur Übertragung der Vielzahl der Datenpakete (225) verwendet wird;
die Vielzahl der Satelliten (12) ebenfalls in der Lage ist, ein Benutzerstation-Satellitenaufwärtsverbindungssignal (214) zu empfangen und ein Benutzerstation-Satellitenabwärtsverbindungssignal (216) mit einer variablen Datenübertragungsgeschwindigkeit zu übertragen, wobei die Datenübertragungsgeschwindigkeit von einer niedrigen Geschwindigkeit, um einen reduzierten Signalleistungsbedarf und reduzierte Kosten für die Austattung der Benutzerstationen (212) vorzusehen, zu einer hohen Geschwindigkeit für schnelle Datenübertragung variiert;
das Benutzerstation-Satellitenaufwärtsverbindungssignal (214) eine Kombination von Direktzugriff- (random acess) und Frequenzmultiplex (FDM = frequency division multiplexing)-Verfahren verwendet; und
das Abwärtsverbindungssignal (35b, 216) und das Relaisstationen-Satellitenaufwärtsverbindungssignal (35a) ein Zeitmultiplexverfahren verwenden;
die Vielzahl der Satelliten (12) und die Benutzerstationen (212) ebenfalls in der Lage sind, ein Auktionsprotokoll bei einem ersten Datenbündel zu verwenden, in welchem der Satellit (12) einen Pegel von Nachrichtenverkehr ankündigt, der zur Speicherung und Weiterleitung laufend angenommen wird, wobei der Pegel des Nachrichtenverkehrs von einem sehr teueren Verkehr mit schneller Weiterleitung bis hin zu einem billigen Verkehr mit langsamer Weiterleitung variierbar ist.

16. Satellitenkommunikationssystem nach Anspruch 8, bei dem die Vielzahl von Satelliten (12) vierundzwanzig Satelliten (12) aufweist, wobei sechs der Satelliten (12) auf den jeweils vier Orbitalebenen umlaufen.

17. Satellitenkommunikationssystem nach Anspruch 9, bei dem die Vielzahl von Satelliten (12) dreißig Satelliten (12) aufweist, wobei sechs der Satelliten (12) auf den jeweils fünf Orbitalebenen umlaufen.

18. Satellitenkommunikationssystem nach Anspruch 11, bei dem die Vielzahl von Satelliten (12), die auf der Vielzahl der äquatorialen Umlaufsbahnen (14) arbeiten, eine Kombination der Erdrelaisstationen (34) und der Intersatellitenverbindungen (55) verwenden können, um Daten zu einem Abgabepunkt weiterzuleiten.

19. Satellitenkommunikationssystem nach Anspruch 12, bei dem das Modem (300) ein Modul ist, das selbstständig oder in Verbindung mit einer Antenne (314) einen Arbeitsplatzrechner (308), eine parallele Schnittstelle (304), einen erweiterten Speicher (302) und ein globales Positionierungssystem (310) miteinander verbinden kann.

20. Satellitenkommunikationssystem nach Anspruch 12, bei dem das Modem (300) einen Aufwärtsverbindungssender (322) und einen Abwärtsverbindungsempfänger (320) aufweist, die mit der Vielzahl der Satelliten (12) eine Vielzahl von Datenpaketen (225) und Systemverwaltungsinformation übertragen können.

21. Satellitenkommunikationssystem nach Anspruch 12, bei dem
das Modem (300) jede von der Vielzahl der Benutzerstationen (212) bezüglich einer Dopplerverschiebung des Abwärtsverbindungssignals (216) von der Vielzahl der Satelliten (12) vorkompensieren kann, wobei eine Frequenzerfassungszeit von jedem von der Vielzahl der Satelliten (12) minimiert wird;
das Modem (300) in der Lage ist, einen Dopplereffekt des Abwärtsverbindungssignals (216) nachzusteuern und den gemessenen Wert des Dopplereffekts mit einem Verhältnis der Frequenz des Aufwärtsverbindungssignals (214) zu der Frequenz des Abwärtsverbindungssignals (216) zu skalieren und das Benutzerstation-Satellitenaufwärtverbindungsssignal (214) so anzugleichen, daß das bezüglich der Dopplerverschiebung korrigierte Aufwärtsverbindungssignal (214) bei dem Satelliten (12) empfangen wird.

22. Satellitenkommunikationssystem nach Anspruch 14, bei dem die dynamischen, adaptiven Kanalzuordnungsmittel eine Computer-Teilsystem (324) mit einem Algorithnus für die Projektierung der Kanalbenutzung aufweisen, wobei dem Algorithmus eine Abtastgesetzmäßigkeit des Absuchens für Halbesekunden-lntervalle zugrunde liegt.

23. Satellitenkommunikationssystem nach Anspruch 15, bei dem die variable Datenübertragungsgeschwindigkeit für ein Benutzerstation-Satellitenaufwärtsverbindungssignal (214) in einem Bereich von 9,6 kbps bis 300 bps liegt, und die variable Datenübertragungsgeschwindigkeit für ein Relaisstation-Satellitenabwärtsverbindungssignal (35b) in einem Bereich von 24 kbps für eine QPSK-Modulation bis zu 6 kbps für eine FSK-Modulation liegt.

24. Verfahren für die Satellitenkommunikation, das folgende Schritte aufweist:
Bereitstellen einer Vielzahl von äquatorialen Relaisstationen, Relaisstationen der mittleren Breite und polaren Relaisstationen (34, 61);
wobei die Relaisstationen jeweils umfäglich längs des Erdäquators (16), in Regionen der mittleren Breite und in der Nähe der Erdpole lokalisiert sind;
Betreiben eines ersten Satelliten (12) in einer äquatorialen, unteren Erdumlaufbahn (14);
Betreiben eines zweiten Satelliten (12) in einer polaren oder geneigten, unteren Erdumlaufbahn (60, 63, 210);
Kommunizieren zwischen dem ersten Satelliten (12) und einer der Vielzahl der äquatorialen Relaisstationen (34) über Aufwärtsverbindungen (35a) und Abwärtsverbindungen (35b), und mit einem der Vielzahl der Satelliten in äquatorialer Umlaufbahn (14) über Intersatellitenverbindungen (55);
Kommunizieren zwischen dem zweiten Satelliten (12) und wenigstens einer der Vielzahl der äquatorialen Relaisstationen (34), Relaisstationen der mittleren Breite (34) und polaren Relaisstationen (61);
Speichern einer Nachricht von einer ersten äquatorialen Relaisstation (34) in dem ersten Satelliten (12) und Weiterleiten der Nachricht zu einer zweiten äquatorialen Relaisstation (34);
Empfangen der Nachricht von einer zweiten äquatorialen Relaisstation (34) mittels des zweiten Satelliten (12) und Weiterleiten der Nachricht zu wenigstens einer der Vielzahl der Relaisstationen der mittleren Breite (34) und der polaren Relaisstationen (61).

25. Verfahren für die Satellitenkommunikation nach Anspruch 24, das außerdem die Schritte des Bereitstellens einer Vielzahl von über die Erde (E) verteilten Benutzerstationen (212) aufweist; des Kommunizierens zwischen jedem der Vielzahl der Satelliten (12) und der Vielzahl der Benutzerstationen (212); und des miteinander Kommunizierens zwischen den Relaisstationen (34) mit Hilfe von Mitteln, die alternativ zu den im vorhergehenden erwähnten Kommunikationensmodi sind.

26. Verfahren für die Satellitenkommunikation nach Anspruch 25, bei dem ein Kommunizieren zwischen dem ersten Satelliten (12) und einer der Vielzahl der äquatorialen Relaisstationen (34) über Aufwärtsverbindungen (35a) und Abwärtsverbindungen (35b), und mit einem der Vielzahl der Satelliten in äquatorialer Umlaufbahn (14) über Intersatellitenverbindungen (55) außerdem den Schritt des Verwendens irgendeiner Kombination der Aufwärtsverbindungen (35a), der Abwärtsverbindungen (35b) und der Intersatellitenverbindungen (55) enthält, um eine Zusendung der Nachricht über eine bestimmte Orbitalebene (14, 60, 63, 210) zu beschleunigen.

27. Verfahren für die Satellitenkommunikation nach Anspruch 25, bei dem ein Kommunizieren zwischen jedem der Vielzahl der Satelliten (12) und wenigstens einer der Vielzahl der Relaisstationen (34, 61, 65) und der Vielzahl der Benutzerstationen (212) außerdem folgende Schritte aufweist:
Übertragen und Empfangen einer Vielzahl von Datenpaketen (225) und Systemverwaltungsinformation zwischen der Vielzahl der Satelliten (12), der Vielzahl der Benutzerstationen (212) und zwischen der Vielzahl der Satelliten (12) und der Vielzahl der Relaisstationen (34, 61, 65);
Übertragen eines Relaisstation-Satellitenabwärtsverbindungssignals (35b) und eines Benutzerstation-Satellitenabwärtsverbindungssignals (216) von der Vielzahl von Satelliten (12), wobei jedes Abwärtsverbindungssignal (35b, 216) ein in vier Segmente geteiltes Spektrum aufweist und ein jedes der Segmente in einer der vier Orbitalebenen verwendet wird, und jedes Abwärtsverbindungssignal (35b, 216) eine Vielzahl von Datenübertragungsblöcken von einer Dauer von 500 Millisekunden aufweist;
Modulieren des Abwärtsverbindungssignals (35b, 216) unter Verwendung eine Frequenzumtastungs (FSK)-Modulation und eine Vierphasen-Umtast (QPSK)-Modulation der Datenpaketübertragungen bei jedem der Vielzahl der Datenübertragungsblöcken in Zeitverzahnung;
Empfangen eines Relaisstation-Aufwärtsverbindungssignals (35a) über die Vielzahl der Satelliten (12), wobei die Vierphasen-Umtast (QPSK)-Modulation zur Übertragung der Vielzahl der Datenpakete (225) verwendet wird;
Empfangen eines Benutzerstation-Satellitenaufwärtsverbindungssignals (214) über die Vielzahl der Satelliten (12) und Übertragen eines eine variable Datenübertragungsgeschwindigkeit aufweisendes Benutzerstation-Satellitenabwärtsverbindungssignals (216), wobei die Datenübertragungsgeschwindigkeit von einer niedrigen Geschwindigkeit, um einen reduzierten Signalleistungsbedarf und reduzierte Kosten für die Ausstattung der Benutzerstationen zu schaffen, bis zu einer hohen Geschwindigkeit für schnelle Datenübertragung variiert;
Multiplexieren des Benutzerstation-Satellitenaufwärtsverbindungssignals (214) unter Verwendung einer Kombination eines Direktzugriff- und Frequenzmultiplex (FDM)-Verfahrens;
Multiplexieren des Abwärtsverbindungssignals (35b, 216) und des Relaisstation-Satellitenaufwärtsverbindungssignals (35a) unter Verwendung eines Zeitmultiplex (TDM)-Verfahrens; und
Anwenden eines Auktionsprotokolls bei einem ersten Datenbündel, in welchem der Satellit (12) den Benutzerstationen (212) einen Pegel von Nachrichtenverkehr ankündigt, der zur Speicherung und Weitergabe laufend angenommen wird, wobei der Pegel des Nachrichtenverkehrs von einem sehr teueren Verkehr mit schneller Weiterleitung bis hin zu einem billigen Verkehr mit langsamer Weiterleitung variierbar ist.

28. Satellitenkommunikationssystem nach Anspruch 1, das zudem eine Vielzahl von über die Erde (E) verteilten Benutzerstationen (212) aufweist:
wobei jeder der Vielzahl der Satelliten (12) in der Lage ist, mit einer der Vielzahl der Benutzerstationen (212) zu kommunizieren;
und wobei wenigstens eine der Vielzahl der Relaisstationen (34) in der Lage ist, als ein Netzwerkbetriebs- und Steuerzentrum (NOCC = control centre) zu arbeiten.

29. Verfahren für die Satellitenkommunikation nach Anspruch 24, das außerdem die Schritte des Bereitstellens einer Vielzahl von über die Erde (E) verteilten Benutzerstationen (212)
und des Kommunizierens zwischen jedem der Vielzahl der Satelliten (12) und der Vielzahl der Benutzerstationen (212) aufweist.

30. Satellitenkommunikationssystem, das folgendes aufweist:
eine Vielzahl von Erdrelaisstationen (34, 61, 65), die mindestens eine Vielzahl äquatorialer Relaisstationen (34) aufweisen;
einen ersten Satelliten (12), der auf einer äquatorialen, unteren Erdumlaufbahn (14) arbeitet;
einen zweiten Satelliten (12), der auf einer äquatorialen, polaren oder geneigten, unteren Erdumlaufbahn (14, 60, 63, 210) arbeitet;
wobei der erste Satellit (12) mit der Vielzahl der äquatorialen Relaisstationen (34) über Aufwärtsverbindungen (35a) und Abwärtsverbindungen (35b) kommunizieren kann;
wobei der zweite Satellit (12) mit wenigstens einer der Vielzahl der Erdrelaisstationen (34, 61, 65) kommunizieren kann;
wobei der erste Satellit (12) in der Lage ist, eine Nachricht von einer ersten äquatorialen Relaisstation (34) zu speichern und die Nachricht zu einer zweiten äquatorialen Relaisstation (34) weiterzuleiten; und
wobei der zweite Satellit (12) in der Lage ist, die Nachricht von der zweiten äquatorialen Relaisstation (34) zu empfangen und die Nachricht zu einer der Vielzahl der Erdrelaisstationen (34, 61, 65) weiterzuleiten.

## Revendications

1. Système de communications par satellites comprenant :
une pluralité de postes relais équatoriaux, polaires et de latitudes intermédiaires (34, 61, 65) ; lesdits postes relais (34, 61, 65) étant placés sur la circonférence respectivement le long de l'équateur terrestre (16), à proximité des pôles terrestres (NP, SP) et dans des régions de latitudes terrestres intermédiaires ;
un premier satellite (12) opérant sur une orbite terrestre basse équatoriale (14) ;
un second satellite (12) opérant sur une orbite terrestre basse polaire ou inclinée (60, 63, 210);
ledit premier satellite (12) étant capable de communiquer avec ladite pluralité de postes relais équatoriaux (34) sur des liaisons montantes (35a) et des liaisons descendantes (35b) ;
ledit second satellite (12) étant capable de communiquer avec au moins l'un de ladite pluralité de postes relais polaires (61), avec au moins l'un de ladite pluralité de postes relais de latitudes intermédiaires (65) et avec au moins l'un de ladite pluralité de postes relais équatoriaux (34) ;
ledit premier satellite (12) étant capable de mémoriser un message provenant d'un premier poste relais équatorial (34) et d'expédier ledit message à un deuxième poste relais équatorial (34) ; et
ledit second satellite (12) étant capable de recevoir ledit message provenant dudit deuxième poste relais équatorial (34) et d'expédier ledit message à l'un de ladite pluralité de poste relais polaires et de latitudes intermédiaires (61, 65).

2. Système de communications par satellites selon la revendication 1, comprenant en outre une pluralité de satellites (12) opérant sur lesdites orbites équatoriale et inclinées (14, 60, 63, 210) ; ladite pluralité de satellites (12) opérant sur ladite orbite équatoriale (14) étant capable de communiquer sur des liaisons entre satellites (55).

3. Système de communications par satellites selon la revendication 2, dans lequel n'importe quelle combinaison desdites liaisons ascendantes (35a), desdites liaisons descendantes (35b) et des liaisons entre satellites (55) peut être employée pour accélérer la délivrance dudit message sur tout un plan orbital particulier (14, 60, 63, 210).

4. Système de communications par satellites selon la revendication 2, dans lequel ladite pluralité de satellites (12) comprend au moins six satellites (12) également espacés sur ladite orbite équatoriale (14).

5. Système de communications par satellites selon la revendication 2, dans lequel ladite pluralité de satellites (12) comprend un maximum de quatorze satellites (12) également espacés sur ladite orbite équatoriale (14).

6. Système de communications par satellites selon la revendication 2, dans lequel chacun de ladite pluralité de satellites (12) est capable de communiquer sur une zone globalement circulaire (44), entre une latitude terrestre (E) de trente degrés nord (18) et une latitude terrestre (E) de trente degrés sud (20).

7. Système de communications par satellites selon la revendication 1, comprenant en outre une pluralité de terminaux d'usagers (212) répartis sur la terre (E) ;
chacun de ladite pluralité de satellites (12) étant capable de communiquer avec l'un de ladite pluralité de terminaux d'usagers (212) ;
au moins l'un de ladite pluralité de postes relais (34) étant capable de fonctionner comme un centre d'opérations et de commande de réseau (NOCC) ; et
lesdits postes relais (34) étant capables de communiquer entre eux par des moyens alternatifs aux modes de communication précédemment mentionnés.

8. Système de communications par satellites selon la revendication 7, dans lequel ladite pluralité d'orbites terrestres basses (14, 60, 63, 210) comprend quatre plans orbitaux (210), chacun desdits plans orbitaux (210) étant incliné de cinquante degrés.

9. Système de communications par satellites selon la revendication 7, dans lequel ladite pluralité d'orbites terrestres basses (14, 60, 63, 210) comprend cinq plans orbitaux, quatre desdits plans orbitaux étant inclinés de cinquante degrés et l'un desdits plans orbitaux étant incliné de zéro degré.

10. Système de communications par satellites selon la revendication 7, dans lequel ladite pluralité d'orbites terrestres basses (14, 60, 63, 210) comprend trois plans orbitaux, deux desdits plans orbitaux étant inclinés de soixante degrés et l'un desdits plans orbitaux étant incliné de zéro degré.

11. Système de communications par satellites selon la revendication 7, dans lequel ladite pluralité de satellites (12), opérant dans ladite pluralité d'orbites équatoriales (14), est capable de communiquer sur des liaisons entre satellites (55).

12. Système de communications par satellites selon la revendication 7, dans lequel chacun de ladite pluralité de terminaux d'usagers (212) comprend un modem (300) capable d'interconnecter un port RS232 de système d'ordinateur à un satellite (12).

13. Système de communications par satellites selon la revendication 7, dans lequel lesdits moyens de communication alternatifs par lesquels lesdits postes relais (34) sont capables de communiquer entre eux comprennent :
une liaison de terminal à très faible ouverture (VSAT) (222) par l'intermédiaire d'un satellite géostationnaire (218) ; ou
un réseau téléphonique commuté public (PSTN) (220).

14. Système de communications par satellites selon la revendication 7, qui comprend en outre :
ladite pluralité de satellites (12) ayant des moyens d'assignation de canaux dynamiques adaptables pour contrôler un groupement de fréquences radio dans la bande de 148,0 à 149,9 MHz et assigner des canaux à ladite pluralité de terminaux d'usagers (212) selon les disponibilités ; lesdits moyens d'assignation de canaux dynamiques adaptables étant capables de balayer ledit groupement de fréquences radio dans un intervalle d'une demi-seconde pour détecter des signaux indiquant l'usage d'un canal, de projeter l'usage du canal pour la demi-seconde suivante et ensuite de donner à un terminal d'usager (212) des instructions sur le canal à utiliser.

15. Système de communications par satellites selon la revendication 7, dans lequel :
ladite pluralité de satellites (12), ladite pluralité de terminaux d'usagers (212) et ladite pluralité de postes relais (34, 61, 65) sont capables d'émettre et de recevoir une pluralité de paquets (225) de données et d'informations de servitudes de système ;
ladite pluralité de satellites (12) est aussi capable d'émettre un signal de liaison descendante (35b, 216) ayant un spectre divisé en quatre segments, chacun desdits segments étant utilisé dans l'un desdits quatre plans orbitaux ;
ledit signal de liaison descendante (35b, 216) comprend une pluralité de trames ayant une durée de 500 millisecondes ;
ledit signal de liaison descendante (35b, 216) a une modulation par déplacement de fréquence (FSK) et une modulation par déplacement de phase tétravalente (QPSK) desdites émissions de paquets dans chacune de ladite pluralité de trames selon un mode en temps partagé ;
ladite pluralité de satellites (12) est aussi capable de recevoir un signal de liaison ascendante (35a, 214) dans lequel ladite modulation par déplacement de phase tétravalente (QPSK) est utilisée pour l'émission de ladite pluralité de paquets (225) ;
ladite pluralité de satellites (12) est aussi capable de recevoir un signal de liaison ascendante terminal d'usager-satellite (214) et d'émettre un signal de liaison descendante terminal d'usager-satellite (216) ayant un débit de données variable, ledit débit de données étant variable entre un débit faible, pour permettre une demande de puissance de salve réduite et un coût d'équipement réduit pour lesdits terminaux d'usagers (212), et un débit élevé pour la transmission rapide de données ;
ledit signal de liaison ascendante terminal d'usager-satellite (214) utilise une combinaison d'accès aléatoire et de multiplexage par partage des fréquences (FDM) ; et
ledit signal de liaison descendante (35b, 216) et ledit signal de liaison ascendante poste relais-satellite (35a) utilisent un multiplexage par partage du temps ;
ladite pluralité de satellites (12) et lesdits terminaux d'usagers (212) sont aussi capables d'employer un protocole d'enchères dans une première salve de données, dans lequel ledit satellite (12) annonce un niveau de densité de trafic de messages qui est actuellement accepté pour la mémorisation et l'expédition, ledit niveau de densité de trafic de messages étant variable entre la densité de trafic d'expédition la plus coûteuse et la plus rapide et la densité de trafic d'expédition la moins coûteuse et la plus lente.

16. Système de communications par satellites selon la revendication 8, dans lequel ladite pluralité de satellites (12) comprend vingt-quatre satellites (12), six desdits satellites (12) se déplaçant dans chacun desdits quatre plans orbitaux.

17. Système de communications par satellites selon la revendication 9, dans lequel ladite pluralité de satellites comprend trente satellites, six satellites (12) se déplaçant dans chacun desdits cinq plans orbitaux.

18. Système de communications par satellites selon la revendication 11, dans lequel ladite pluralité de satellites (12), opérant dans ladite pluralité d'orbites équatoriales (14), est capable d'utiliser une combinaison desdits postes relais terrestres (34) et desdites liaisons entre satellites (55) pour retransmettre des données à un point de délivrance.

19. Système de communications par satellites selon la revendication 12, dans lequel ledit modem (300) est un module capable d'une interconnexion, par lui-même ou en combinaison, avec une antenne (314), un ordinateur personnel (308), une interface parallèle (304), une mémoire étendue (302), et un système de positionnement mondial (310).

20. Système de communications par satellites selon la revendication 12, dans lequel ledit modem (300) comprend un émetteur de liaison montante (322) et un récepteur de liaison descendante (320) capables de communiquer une pluralité de paquets (225) de données et d'informations de servitudes de système avec ladite pluralité de satellites (12).

21. Système de communications par satellites selon la revendication 12, dans lequel :
ledit modem (300) est capable de pré-compenser, pour chacun de ladite pluralité de terminaux d'usagers (212), le déplacement Doppler dudit signal de liaison descendante (216) provenant de ladite pluralité de satellites (12), minimisant le temps d'acquisition de fréquences par chacun de ladite pluralité de satellites (12) ;
ledit modem (300) étant capable de suivre un effet Doppler dudit signal de liaison descendante (216) et d'établir l'échelle de la valeur mesurée dudit effet Doppler par un rapport de ladite fréquence de signal de liaison ascendante (214) à ladite fréquence de signal de liaison descendante (216), et d'ajuster le signal de liaison ascendante terminal d'usager-satellite (214) de telle sorte que ledit signal de liaison ascendante (214) soit reçu au niveau dudit satellite (12) en étant corrigé du point de vue dudit déplacement Doppler.

22. Système de communications par satellites selon la revendication 14, dans lequel lesdits moyens d'assignation de canaux dynamiques adaptables comprennent un sous-système d'ordinateur (324) ayant un algorithme pour ledit usage de canal projeté, ledit algorithme étant basé sur un historique des échantillonnages du balayage pour lesdits intervalles d'une demi-seconde.

23. Système de communications par satellites selon la revendication 15, dans lequel ledit débit de données variable pour un signal de liaison ascendante terminal d'usager-satellite (214) est situé dans la plage allant de 9,6 kbps à 300 bps, et ledit débit de données variable pour un signal de liaison descendante poste relais-satellite (35b) est situé dans la plage allant de 24 kbps pour une modulation QPSK à 6 kbps pour une modulation FSK.

24. Procédé de communications par satellites, comprenant les étapes de :
disposition d'une pluralité de postes relais équatoriaux, de latitudes intermédiaires et polaires (34, 61);
lesdits postes relais étant situés sur la circonférence respectivement le long de l'équateur terrestre (16), dans des régions de latitudes terrestres intermédiaires et à proximité des pôles terrestres ;
fonctionnement d'un premier satellite (12) sur une orbite terrestre basse équatoriale (14) ;
fonctionnement d'un second satellite (12) sur une orbite terrestre basse polaire ou inclinée (60, 63, 210);
communication entre ledit premier satellite (12) et l'un de ladite pluralité de postes relais équatoriaux (34) sur des liaisons montantes (35a) et des liaisons descendantes (35b), et avec l'un de ladite pluralité de satellites en orbite équatoriale (14) sur des liaisons entre satellites (55) ;
communication entre ledit second satellite (12) et au moins l'un de ladite pluralité de postes relais équatoriaux (34), de postes relais de latitudes intermédiaires (34) et de postes relais polaires (61) ;
mémorisation d'un message provenant d'un premier poste relais équatorial (34) dans ledit premier satellite (12) et expédition dudit message à un deuxième poste relais équatorial (34);
réception dudit message provenant dudit deuxième poste relais équatorial (34) avec ledit second satellite (12) et expédition dudit message à au moins l'un de ladite pluralité de postes relais de latitudes intermédiaires (34) et de postes relais polaires (61).

25. Procédé de communications par satellite selon la revendication 24, comprenant en outre les étapes de disposition d'une pluralité de terminaux d'usagers (212) répartis sur la terre (E) ; de communication entre chacun de ladite pluralité de satellites (12) et ladite pluralité de terminaux d'usagers (212) ; et de communication mutuelle entre lesdits postes relais (34) par des moyens alternatifs aux modes de communication précédemment mentionnés.

26. Procédé de communications par satellite selon la revendication 25, dans lequel la communication entre ledit premier satellite (12) et l'un de ladite pluralité de postes relais équatoriaux (34) sur des liaisons ascendantes (35a) et des liaisons descendantes (35b), et avec l'un de ladite pluralité de satellites en orbite équatoriale (14) sur des liaisons entre satellites (55), comprend en outre l'étape d'utilisation de n'importe quelle combinaison desdites liaisons ascendantes (35a), desdites liaisons descendantes (35b) et desdites liaisons entre satellites (55) pour accélérer la délivrance dudit message sur tout un plan orbital particulier (14, 60, 63, 210).

27. Procédé de communications par satellite selon la revendication 25, dans lequel la communication entre chacun de ladite pluralité de satellites (12) et au moins l'un de ladite pluralité de postes relais (34, 61, 65) et ladite pluralité de terminaux d'usagers (212) comprend en outre les étapes de :
émission et réception d'une pluralité de paquets (225) de données et d'informations de servitudes de système entre ladite pluralité de satellites (12), ladite pluralité de terminaux d'usagers (212) et entre ladite pluralité de satellites (12) et ladite pluralité de postes relais (34, 61, 65) ;
émission d'un signal de liaison descendante poste relais-satellite (35b) et d'un signal de liaison descendante terminal d'usager-satellite (216) à partir de ladite pluralité de satellites (12), chaque dit signal de liaison descendante (35b, 216) ayant un spectre divisé en quatre segments, chacun desdits segments étant utilisé dans l'un desdits quatre plans orbitaux, ledit signal de liaison descendante (35b, 216) comprenant une pluralité de trames d'une durée de 500 millisecondes ;
modulation dudit signal de liaison descendante (35b, 216) par utilisation d'une modulation par déplacement de fréquence (FSK) et d'une modulation par déplacement de phase tétravalente (QPSK) desdites transmissions de paquets dans chacune de ladite pluralité de trames selon un mode en temps partagé ;
réception par ladite pluralité de satellites (12) d'un signal de liaison ascendante de poste relais (35a) dans lequel ladite modulation par déplacement de phase tétravalente (QPSK) est utilisée pour l'émission de ladite pluralité de paquets (225) ;
réception d'un signal de liaison ascendante terminal d'usager-satellite (214) par ladite pluralité de satellites (12) et émission d'un signal de liaison descendante terminal d'usager-satellite (216) ayant un débit de données variable, ledit débit de données étant variable entre un débit faible, pour permettre une demande de puissance de salve réduite et un coût d'équipement réduit pour lesdits terminaux d'usagers (212), et un débit élevé pour la transmission rapide de données ;
multiplexage dudit signal de liaison ascendante terminal d'usager-satellite (214) utilisant une combinaison d'accès aléatoire et de multiplexage par partage des fréquences (FDM) ;
multiplexage dudit signal de liaison descendante (35b, 216) et dudit signal de liaison ascendante poste relais-satellite (35a) utilisant un multiplexage par partage du temps (TDM) ; et
emploi d'un protocole d'enchères dans une première salve de données, dans lequel ledit satellite (12) annonce auxdits terminaux d'usagers (212) un niveau de densité de trafic de messages qui est actuellement accepté pour la mémorisation et l'expédition, ledit niveau de densité de trafic de messages étant variable entre la densité de trafic d'expédition la plus coûteuse et la plus rapide et la densité de trafic d'expédition la moins coûteuse et la plus lente.

28. Système de communications par satellites selon la revendication 1, comprenant en outre une pluralité de terminaux d'usagers (212) répartis sur la terre (E) ;
chacun de ladite pluralité de satellites (12) étant capable de communiquer avec l'un de ladite pluralité de terminaux d'usagers (212) ;
et au moins l'un de ladite pluralité de postes relais (34) étant capable de fonctionner comme un centre d'opérations et de commande de réseau (NOCC).

29. Procédé de communications par satellites selon la revendication 24, comprenant en outre les étapes de disposition d'une pluralité de terminaux d'usagers (212) répartis sur la terre (E) ;
et de communication entre chacun de ladite pluralité de satellites (12) et ladite pluralité de terminaux d'usagers (212).

30. Système de communications par satellites comprenant :
une pluralité de postes relais terrestres (34, 61, 65) comprenant au moins une pluralité de postes relais équatoriaux (34);
un premier satellite (12) opérant sur une orbite terrestre basse équatoriale (14) ;
un second satellite (12) opérant sur une orbite terrestre basse équatoriale, polaire ou inclinée (14, 60, 63, 210);
ledit premier satellite (12) étant capable de communiquer avec ladite pluralité de postes relais équatoriaux (34) sur des liaisons ascendantes (35a) et des liaisons descendantes (35b) ;
ledit second satellite (12) étant capable de communiquer avec au moins l'un de ladite pluralité de postes relais terrestres (34, 61, 65) ;
ledit premier satellite (12) étant capable de mémoriser un message provenant d'un premier poste relais équatorial (34) et d'expédier ledit message à un deuxième poste relais équatorial (34) ; et
ledit second satellite (12) étant capable de recevoir ledit message provenant dudit deuxième poste relais équatorial (34) et d'expédier ledit message à l'un de ladite pluralité de poste relais terrestres (34, 61, 65).
